(19) 

Europäisches Patentamt
European Patent Office
Office européen des brevets

(11) **EP 4 417 979 A1**

(12) **EUROPEAN PATENT APPLICATION**
published in accordance with Art. 153(4) EPC

(43) Date of publication:
**21.08.2024 Bulletin 2024/34**

(51) International Patent Classification (IPC):
**G01P 5/00** *(2006.01)*     **G01S 13/58** *(2006.01)*
**G01S 19/42** *(2010.01)*     **G01C 11/00** *(2006.01)*

(21) Application number: **22885787.6**

(52) Cooperative Patent Classification (CPC):
**G01C 11/00; G01P 5/00; G01P 5/26; G01S 13/58;**
**G01S 19/42;** Y02A 90/30

(22) Date of filing: **20.10.2022**

(86) International application number:
**PCT/CN2022/126428**

(87) International publication number:
**WO 2023/071909 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.10.2021  CN 202111265918**

(71) Applicant: **Huawei Technologies Co., Ltd.
Shenzhen, Guangdong 518129 (CN)**

(72) Inventors:
• **WANG, Hui**
  **Shenzhen, Guangdong 518129 (CN)**
• **DING, Genming**
  **Shenzhen, Guangdong 518129 (CN)**
• **TANG, Xin**
  **Shenzhen, Guangdong 518129 (CN)**
• **ZHANG, Zhong**
  **Shenzhen, Guangdong 518129 (CN)**
• **OUYANG, Weilong**
  **Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **METHOD AND DEVICE FOR MEASURING FLOW VELOCITY OF FLUID SURFACE, AND STORAGE MEDIUM**

(57)     A method and an apparatus for measuring a flow velocity on a fluid surface and a storage medium are provided. In the method for measuring a flow velocity, a to-be-processed video is first acquired, and a monitoring region on a fluid surface in the video is determined based on the video according to a preset rule. The monitoring region can adequately represent a flow velocity on the fluid surface. A pose of a radar system is adjusted based on a location of the monitoring region on the fluid surface, so that the adjusted radar system faces the monitoring region and transmits a radar signal to the monitoring region. Point cloud data of the radar signal is obtained, and the flow velocity on the fluid surface in the monitoring region is obtained based on the point cloud data, and is used as a first flow velocity on the fluid surface. Through the method for measuring a flow velocity, a pose of a radar is adaptively adjusted based on visual information, and an undesirable observation region is avoided, so that a first flow velocity on a fluid surface is determined based on point cloud data corresponding to a radar signal, and accuracy of a flow-velocity measurement result is ensured.

FIG. 6

| Determine a monitoring region on a fluid surface in a to-be-processed video | 601 |
| Adjust a pose of a radar system based on a position of the monitoring region, so that the radar system after the adjustment transmits a radar signal to the monitoring region | 602 |
| Obtain point cloud data, where the point cloud data is obtained based on a reflected signal of the radar signal | 603 |
| Determine a first flow velocity on the fluid surface based on the point cloud data | 604 |

## Description

This application claims priority to Chinese Patent Application No. 202111265918.5, filed with the China National Intellectual Property Administration on October 28, 2021 and entitled "METHOD AND APPARATUS FOR MEASURING FLOW VELOCITY ON FLUID SURFACE AND STORAGE MEDIUM", which is incorporated herein by reference in its entirety.

## TECHNICAL FIELD

This application relates to the field of intelligent hydrological monitoring, and in particular, to a method and an apparatus for measuring a flow velocity on a fluid surface and a storage medium.

## BACKGROUND

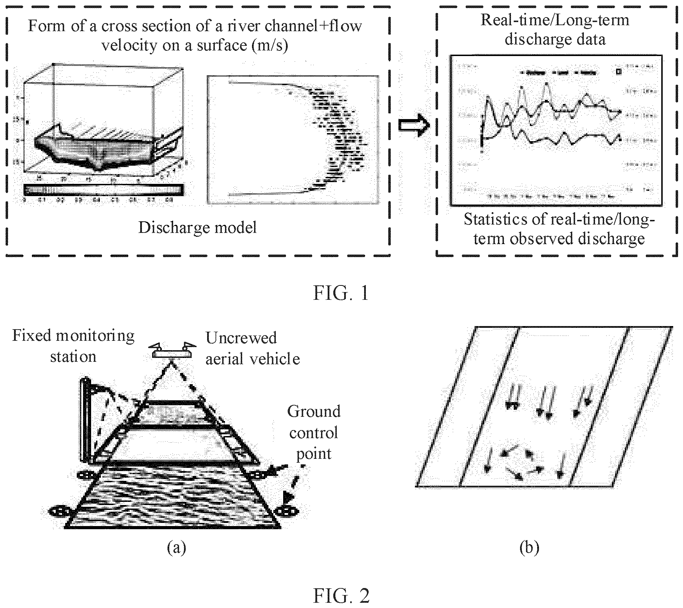

Currently, the field of discharge monitoring is still in a non-intelligent monitoring stage that mainly relies on manual surveying and mapping. Therefore, an efficient and high-precision discharge monitoring technology needs to be developed urgently. A main means of a current discharge monitoring technology is to sense a flow velocity of a fluid by using a sensing device, and calculate a discharge based on a flow velocity and a cross-sectional area of the fluid. A flow velocity-discharge model is shown in FIG. 1. Therefore, flow-velocity detection is a key to constructing a discharge monitoring capability.

To resolve the problem of flow-velocity monitoring, a variety of different monitoring devices have been developed. Based on whether the monitoring devices are in contact with a fluid during measurement, the monitoring devices can be further classified into two types: a conventional contact measurement device and a novel non-contact measurement device. The contact measurement device includes a float flowmeter, an ultrasonic Doppler flowmeter, an acoustic Doppler current profiler (Acoustic Doppler Current Profiler, ADCP), and the like. Precision of this type of flowmeter is highly related to mechanical structure performance of the instrument, and a velocity measurement range of this type of flowmeter is relatively limited. The measurement precision of the contact measurement device is easily affected by fluid conditions (fluid temperature, floating objects in water, sediment content), and the like. In addition, in mountainous regions, plateaus, and the like with harsh natural environments, manual installation is dangerous and maintenance costs are high.

To avoid the foregoing problem of the contact measurement device, a novel non-contact measurement device is provided in conventional technologies. The non-contact measurement device includes a radar flowmeter and a visual flowmeter. The non-contact measurement devices are not affected by various fluid conditions and floating objects, are easy to install and maintain, and have good stability. However, the foregoing two types of non-contact measurement devices still have many problems, and cannot fully meet high-precision working requirements of a hydrological measurement device.

## SUMMARY

In view of this, a method and an apparatus for measuring a flow velocity on a fluid surface and a storage medium are proposed, to improve measurement precision of a non-contact measurement device. In embodiments of this application, a monitoring region on a fluid surface is determined based on a to-be-processed video, and a pose of a radar system is adjusted based on a location of the monitoring region, so that the adjusted radar system transmits a radar signal to the monitoring region. To be specific, a pose of a radar is adaptively adjusted based on visual information, and an undesirable observation region is avoided, so that a first flow velocity on a fluid surface is determined based on point cloud data corresponding to a radar signal, and precision of a flow-velocity measurement result is ensured.

According to a first aspect, embodiments of this application provide a method for measuring a flow velocity on a fluid surface. The method for measuring a flow velocity includes: first obtaining a to-be-processed video acquired by using an image acquisition device, and determining a monitoring region on a fluid surface in the to-be-processed video based on the video according to a preset rule, where the monitoring region can adequately represent a flow velocity on the fluid surface; adjusting a pose of a radar system based on a location of the monitoring region on the fluid surface, so that the adjusted radar system faces the monitoring region, and the adjusted radar system transmits a radar signal to the monitoring region; and obtaining a reflected signal of the radar signal, obtaining point cloud data based on the reflected signal, obtaining the flow velocity on the fluid surface in the monitoring region based on the point cloud data, and using the flow velocity as a first flow velocity on the fluid surface, to ensure accuracy of a flow-velocity measurement result.

The fluid surface includes various possible water body surfaces, for example, a river surface, a water body surface of a reservoir, and a sea surface. This method embodiment may be used to measure flow velocities on various possible water body surfaces. The pose of the radar system includes a location and an angle of the radar system. The point cloud data includes Doppler information of the radar system, and the Doppler information includes a Doppler frequency, to be specific, a frequency difference between a frequency of the reflected signal and a frequency of the transmitted signal.

In another possible implementation, the determining a monitoring region on a fluid surface in the to-be-processed video includes:

determining a target image frame in the to-be-processed video; and

determining the monitoring region on the fluid surface based on the target image frame.

Candidate image frames may be all image frames in the to-be-processed video, or may be candidate image frames obtained by sampling the to-be-processed video according to the preset rule.

In this implementation, after the to-be-processed video is obtained, the target image frame may be determined according to the preset rule, and then the monitoring region on the fluid surface is determined based on the target image frame. In other words, the target image frame and the monitoring region are intelligently selected, and an observation scenario that does not meet a requirement of a flow-velocity measurement specification is removed, to ensure accuracy of the determined monitoring region, and provide a priori knowledge for a subsequent flow-velocity measurement algorithm, so that a provided flow-velocity measurement solution has higher data quality.

In another possible implementation, the target image frame is an image frame that meets the preset rule, and the preset rule includes that a lighting condition of the target image frame meets a preset lighting condition.

In this implementation, a possible preset rule is provided, to be specific, the lighting condition of the target image frame meets the preset lighting condition. Before flow-velocity monitoring is performed, a river surface test condition is first determined for a candidate image frame, to further improve quality and precision of a field flow-velocity measurement result.

In another possible implementation, the target image frame is an image frame that meets the preset rule, the preset rule includes that the target image frame does not include a non-natural floating object, and the non-natural floating object is a floating object whose size is greater than a preset size threshold or a floating object of a preset type.

For example, the non-natural floating object includes a large floating log, a swimming organism, a hull, and the like. Because a flow velocity of the non-natural floating object may differ greatly from the flow velocity on the fluid surface, the flow-velocity measurement result may be affected. Therefore, impact of the non-natural floating object can be avoided as much as possible during the determining of the monitoring region.

In this implementation, another possible preset rule is provided, to be specific, the target image frame does not include a non-natural floating object, and the non-natural floating object is further defined. Whether the target image frame includes a floating object whose size is greater than the preset size threshold or a floating object of the preset type is determined, so that an observable target image frame is selected, and a selection condition of the target image frame is specified, to further ensure that the provided flow-velocity measurement solution has higher data quality.

In another possible implementation, a flow-velocity measurement line of the monitoring region is in a direction of fluid flow. For example, when a fluid is a river, the flow-velocity measurement line is a direction along a river channel.

In this implementation, a selection condition of the monitoring region is further specified, and a region whose flow-velocity measurement line is in the direction of fluid flow is determined as the monitoring region on the fluid surface, so that a high-precision flow-velocity measurement result with a high effective data rate can be subsequently obtained based on the monitoring region.

In another possible implementation, the monitoring region does not include a non-natural floating object, and the non-natural floating object is a floating object whose size is greater than a preset size threshold or a floating object of a preset type.

In this implementation, a selection condition of the monitoring region is further specified, and whether the monitoring region includes a floating object whose size is greater than the preset size threshold or a floating object of the preset type is determined, so that an observable monitoring region is selected, and a high-precision flow-velocity measurement result with a high effective data rate can be subsequently obtained based on the monitoring region.

In another possible implementation, the determining a first flow velocity on the fluid surface based on the point cloud data includes:

obtaining radar pose information after the adjustment, where the radar pose information indicates an angle of a radar module after the adjustment; and determining the first flow velocity on the fluid surface based on the point cloud data and the radar pose information of the radar module.

In this implementation, the radar pose information after the adjustment is obtained, and the first flow velocity on the fluid surface is determined based on the point cloud data and the radar pose information of the radar module, to implement a high-reliability and high-precision first flow velocity.

In another possible implementation, the method further includes:

determining a second flow velocity on the fluid surface in the monitoring region based on the to-be-processed video; and fusing the first flow velocity and the second flow velocity to obtain a third flow velocity on the fluid surface.

In this implementation, the second flow velocity on the fluid surface in the monitoring region is determined based on the to-be-processed video, and the first flow velocity and the second flow velocity are fused to obtain the third flow velocity on the fluid surface. This avoids a case that it is difficult to meet a high-precision flow-velocity measurement requirement by using a single sensor module in conventional technologies, and implements a fusion flow-velocity measurement solution in which radar-vision multi-scenario collaboration is implemented, to ensure the precision of the flow-velocity measurement result, and meet a requirement of a high-precision discharge measurement result in current discharge monitoring scenarios such as flood prevention and water intake and use monitoring.

In another possible implementation, the method further includes:

determining a fluid surface feature of the monitoring region based on the to-be-processed video, where the fluid surface feature indicates a fluid feature or distribution of floating objects in the monitoring region; and
determining a velocity measurement algorithm based on the fluid surface feature; and
the determining a second flow velocity on the fluid surface in the monitoring region based on the to-be-processed video includes:
determining the second flow velocity on the fluid surface in the monitoring region based on the to-be-processed video by using the velocity measurement algorithm.

In this implementation, the fluid surface feature of the monitoring region is determined based on the to-be-processed video, the velocity measurement algorithm is determined based on the fluid surface feature, and the velocity measurement algorithm is used to determine the second flow velocity on the fluid surface in the monitoring region based on the to-be-processed video. In this way, different velocity measurement algorithms may be flexibly selected based on the fluid feature or the distribution of the floating objects in the monitoring region, to further improve data quality of the flow-velocity measurement result.

In another possible implementation, the fluid surface feature indicates the fluid feature or a distribution density of the floating objects in the monitoring region, and the determining a velocity measurement algorithm based on the fluid surface feature includes:

if the fluid surface feature is in a first level, determining the velocity measurement algorithm as a cross-correlation algorithm or an autocorrelation algorithm; or
if the fluid surface feature is in a second level, determining the velocity measurement algorithm as an autocorrelation algorithm,
where fluid features or distribution densities of the floating objects in the monitoring region corresponding to the first level and the second level decrease sequentially.

In this implementation, the fluid surface feature is classified into two levels. If the fluid surface feature is in the first level, the velocity measurement algorithm is determined as a cross-correlation algorithm or an autocorrelation algorithm. If the fluid surface feature is in the second level, the velocity measurement algorithm is determined as an autocorrelation algorithm, and the velocity measurement algorithm is flexibly selected based on the fluid features or the distribution densities of the floating objects in the monitoring region, to further implement precise measurement of the flow velocity on the fluid surface.

In another possible implementation, the cross-correlation algorithm includes an LSPIV algorithm, and the autocorrelation algorithm includes an STIV algorithm.

In this implementation, the cross-correlation algorithm includes the LSPIV algorithm, and the autocorrelation algorithm includes the STIV algorithm, to further ensure executability of a high-precision flow-velocity measurement method.

In another possible implementation, the fusing the first flow velocity and the second flow velocity to obtain a third flow velocity on the fluid surface includes:
fusing the first flow velocity and the second flow velocity to obtain the third flow velocity on the fluid surface, where the fusion includes at least one of interpolation, complementation, and correction.

In this implementation, the first flow velocity (to be specific, the first flow velocity) and a visual flow-velocity measurement result (to be specific, the second flow velocity) are fused to obtain the third flow velocity on the fluid surface, to implement a high-precision radar-vision fusion flow-velocity measurement result.

In another possible implementation, the method further includes:

obtaining reference data; and
correcting the third flow velocity based on the reference data to obtain a fourth flow velocity on the fluid surface.

In this implementation, reference data is obtained, and the third flow velocity is corrected based on the reference data to obtain the fourth flow velocity on the fluid surface. In other words, the radar-vision fusion flow-velocity measurement result, to be specific, the third flow velocity, is re-corrected with reference to the reference data. Finally, an all-weather and high-precision fusion flow-velocity measurement solution can be implemented.

In another possible implementation, the reference data includes at least one of a wind speed, a wind direction, or a rainfall.

In this implementation, the reference data is further defined, and the reference data includes at least one of a wind speed, a wind direction, or a rainfall. In other words, other meteorological sensor data is accessed to re-correct the radar-vision fusion flow-velocity measurement result, to further improve the precision of the flow-velocity measurement result.

In another possible implementation, the reference data includes the flow velocity on the fluid surface that is obtained based on data acquired by another sensor. The another sensor may be a meteorological sensor and/or a contact measurement device. For example, the meteorological sensor includes a wind speed and direction sensor, a rainfall sensor, and the like. The contact measurement device includes a rotor flowmeter, a float flowmeter, an ultrasonic Doppler flowmeter, an acoustic Doppler current profiler, and the like. The flow velocity on the fluid surface is obtained based on the data acquired by the another sensor, so that the third flow velocity can be further corrected, to improve accuracy of the result.

According to a second aspect, embodiments of this application provide a method for measuring a flow velocity on a fluid surface. The method includes:

determining a target image frame in a to-be-processed video, where the target image frame is an image frame that meets a preset rule, and the preset rule includes that a lighting condition of the target image frame meets a preset lighting condition or the target image frame does not include a non-natural floating object;
determining a monitoring region on the fluid surface based on the target image frame; and
determining a second flow velocity on the fluid surface in the monitoring region based on the to-be-processed video.

In this implementation, in the method for measuring a flow velocity, a to-be-processed video acquired by using an image acquisition device is first obtained, and a monitoring region on a fluid surface in the to-be-processed video is determined based on the video according to a preset rule, where the monitoring region can adequately represent the flow velocity on the fluid surface. The second flow velocity on the fluid surface in the monitoring region is determined based on the to-be-processed video. In other words, the target image frame and the monitoring region are intelligently selected, and an observation scenario that does not meet a requirement of a flow-velocity measurement specification is removed, to ensure accuracy of the determined monitoring region, provide a priori knowledge for a subsequent flow-velocity measurement algorithm, and ensure a high-precision flow-velocity measurement result.

In a possible implementation, the fluid surface includes a water body surface.

In another possible implementation, the non-natural floating object is a floating object whose size is greater than a preset size threshold or a floating object of a preset type.

In another possible implementation, a flow-velocity measurement line of the monitoring region is in a direction of fluid flow.

In another possible implementation, the monitoring region does not include a non-natural floating object, and the non-natural floating object is a floating object whose size is greater than a preset size threshold or a floating object of a preset type.

In another possible implementation, the determining a second flow velocity on the fluid surface in the monitoring region based on the to-be-processed video includes:

determining a fluid surface feature of the monitoring region based on the to-be-processed video, where the fluid surface feature indicates a fluid feature or distribution of floating objects in the monitoring region; and
determining a velocity measurement algorithm based on the fluid surface feature; and
determining the second flow velocity on the fluid surface in the monitoring region based on the to-be-processed video by using the velocity measurement algorithm.

In another possible implementation, the fluid surface feature indicates the fluid feature or a distribution density of the floating objects in the monitoring region, and the determining a velocity measurement algorithm based on the fluid surface feature includes:

if the fluid surface feature is in a first level, determining the velocity measurement algorithm as a cross-correlation algorithm or an autocorrelation algorithm; or
if the fluid surface feature is in a second level, determining the velocity measurement algorithm as an autocorrelation algorithm,
where fluid features or distribution densities of the floating objects in the monitoring region corresponding to the first level and the second level decrease sequentially.

In another possible implementation, the cross-correlation algorithm includes an LSPIV algorithm, and the autocorrelation algorithm includes an STIV algorithm.

In another possible implementation, the method further includes:

obtaining reference data; and
correcting the second flow velocity based on the reference data to obtain a fifth flow velocity on the fluid surface.

According to a third aspect, embodiments of this application provide an apparatus for measuring a flow velocity on a fluid surface. The apparatus includes:

a first determining module, configured to determine a monitoring region on a fluid surface in a to-be-processed video;
an adjustment module, configured to adjust a pose of a radar system based on a location of the monitoring region, so that the adjusted radar system transmits a radar signal to the monitoring region;
an obtaining module, configured to obtain point cloud data, where the point cloud data is obtained based on a reflected signal of the radar signal; and
a second determining module, configured to determine a first flow velocity on the fluid surface based on the point cloud data.

In a possible implementation, the fluid surface includes a water body surface.

In another possible implementation, the pose of the radar system includes a location and an angle of the radar system.

In another possible implementation, the point cloud data includes Doppler information of the radar system.

In another possible implementation, the first determining module is further configured to:

determine a target image frame in the to-be-processed video; and
determine the monitoring region on the fluid surface based on the target image frame.

In another possible implementation, the target image frame is an image frame that meets a preset rule, and the preset rule includes that a lighting condition of the target image frame meets a preset lighting condition.

In another possible implementation, the target image frame is an image frame that meets a preset rule, the preset rule includes that the target image frame does not include a non-natural floating object, and the non-natural floating object is a floating object whose size is greater than a preset size threshold or a floating object of a preset type.

In another possible implementation, a flow-velocity measurement line of the monitoring region is in a direction of fluid flow.

In another possible implementation, the monitoring region does not include a non-natural floating object, and the non-natural floating object is a floating object whose size is greater than a preset size threshold or a floating object of a preset type.

In another possible implementation, the second determining module is further configured to:

obtain radar pose information after the adjustment, where the radar pose information indicates an angle of a radar module after the adjustment; and
determine the first flow velocity on the fluid surface based on the point cloud data and the radar pose information of the radar module.

In another possible implementation, the apparatus further includes:

a third determining module, configured to determine a second flow velocity on the fluid surface in the monitoring region based on the to-be-processed video; and
a fusion module, configured to fuse the first flow velocity and the second flow velocity to obtain a third flow velocity on the fluid surface.

In another possible implementation, the apparatus further includes: a fourth determining module, configured to:

determine a fluid surface feature of the monitoring region based on the to-be-processed video, where the fluid surface feature indicates a fluid feature or distribution of floating objects in the monitoring region; and
determine a velocity measurement algorithm based on the fluid surface feature; and
the third determining module is further configured to: determine the second flow velocity on the fluid surface in the monitoring region based on the to-be-processed video by using the velocity measurement algorithm.

In another possible implementation, the fluid surface feature indicates the fluid feature or a distribution density of the floating objects in the monitoring region, and the fourth determining module is further configured to:

if the fluid surface feature is in a first level, determine the velocity measurement algorithm as a cross-correlation algorithm or an autocorrelation algorithm; or
if the fluid surface feature is in a second level, determine the velocity measurement algorithm as an autocorrelation algorithm,
where fluid features or distribution densities of the floating objects in the monitoring region corresponding to the first level and the second level decrease sequentially.

In another possible implementation, the cross-correlation algorithm includes an LSPIV algorithm, and the autocorrelation algorithm includes an STIV algorithm.

In another possible implementation, the fusion module is further configured to:
fuse the first flow velocity and the second flow velocity to obtain the third flow velocity on the fluid surface, where the fusion includes at least one of interpolation, complementation, and correction.

In another possible implementation, the apparatus further includes: a correction module, configured to:

obtain reference data; and

correct the third flow velocity based on the reference data to obtain a fourth flow velocity on the fluid surface.

In another possible implementation, the reference data includes at least one of a wind speed, a wind direction, or a rainfall.

According to a fourth aspect, embodiments of this application provide an apparatus for measuring a flow velocity on a fluid surface. The apparatus includes:

a first determining module, configured to determine a target image frame in a to-be-processed video, where the target image frame is an image frame that meets a preset rule, and the preset rule includes that a lighting condition of the target image frame meets a preset lighting condition or the target image frame does not include a non-natural floating object;

a second determining module, configured to determine a monitoring region on a fluid surface based on the target image frame; and

a third determining module, configured to determine a second flow velocity on the fluid surface in the monitoring region based on the to-be-processed video.

In a possible implementation, the fluid surface includes a water body surface.

In another possible implementation, a pose of a radar system includes a location and an angle of the radar system.

In another possible implementation, point cloud data includes Doppler information of the radar system.

In another possible implementation, the non-natural floating object is a floating object whose size is greater than a preset size threshold or a floating object of a preset type.

In another possible implementation, a flow-velocity measurement line of the monitoring region is in a direction of fluid flow.

In another possible implementation, the monitoring region does not include a non-natural floating object, and the non-natural floating object is a floating object whose size is greater than a preset size threshold or a floating object of a preset type.

In another possible implementation, the third determining module is further configured to:

determine a fluid surface feature of the monitoring region based on the to-be-processed video, where the fluid surface feature indicates a fluid feature or distribution of floating objects in the monitoring region; and

determine a velocity measurement algorithm based on the fluid surface feature; and

determine the second flow velocity on the fluid surface in the monitoring region based on the to-be-processed video by using the velocity measurement algorithm.

In another possible implementation, the fluid surface feature indicates the fluid feature or a distribution density of the floating objects in the monitoring region, and the third determining module is further configured to:

if the fluid surface feature is in a first level, determine the velocity measurement algorithm as a cross-correlation algorithm or an autocorrelation algorithm; or

if the fluid surface feature is in a second level, determine the velocity measurement algorithm as an autocorrelation algorithm,

where fluid features or distribution densities of the floating objects in the monitoring region corresponding to the first level and the second level decrease sequentially.

In another possible implementation, the cross-correlation algorithm includes an LSPIV algorithm, and the autocorrelation algorithm includes an STIV algorithm.

In another possible implementation, the apparatus further includes: a correction module, configured to:

obtain reference data; and

correct the second flow velocity based on the reference data to obtain a fifth flow velocity on the fluid surface.

According to a fifth aspect, an embodiment of this application provides a radar-vision fusion flow-velocity measurement system. The system includes a vision module and a radar module. The system is configured to implement the method provided in any one of the first aspect or the possible implementations of the first aspect.

According to a sixth aspect, embodiments of this application provide an apparatus for measuring a flow velocity on a fluid surface. The apparatus includes:

a processor; and

a memory, configured to store instructions executable by the processor, where

the processor is configured to implement the method provided in any one of the first aspect or the possible implementations of the first aspect when executing the instructions, or implement the method provided in any one of the second aspect or the possible implementations of the second aspect when executing the instructions.

According to a seventh aspect, embodiments of this application provide a computer program product. The computer program product includes computer-readable instructions, and when the computer-readable instructions run on a computer device, the computer device is enabled to perform the method provided in any one of the first aspect or the possible implementations of the first aspect, or perform the method provided in any one of the second aspect or the possible implementations of the second aspect.

According to an eighth aspect, embodiments of this application provide a computer-readable storage medium. The computer-readable storage medium stores computer-readable instructions, and when the computer-readable instructions run on a computer device, the computer device is enabled to perform the method provided in any one of the first aspect or the possible implementations of the first aspect, or perform the method provided in any one of the second aspect or the possible implementations of the second aspect.

**BRIEF DESCRIPTION OF DRAWINGS**

The accompanying drawings included in this specification and constituting a part of this specification and this specification jointly show example embodiments, features, and aspects of this application, and are intended to explain the principles of this application.

FIG. 1 is a schematic diagram of a flow velocity-discharge calculation model in conventional technologies;

FIG. 2 is a test principle diagram of a visual flowmeter in conventional technologies;

FIG. 3 is a schematic diagram of a structure of a radar-vision fusion flow-velocity measurement system according to an example embodiment of this application;

FIG. 4 is a schematic diagram of a structure of a radar-vision fusion flow-velocity measurement system according to another example embodiment of this application;

FIG. 5 is a schematic diagram of a structure of a monitoring station according to another example embodiment of this application;

FIG. 6 is a flowchart of a method for measuring a flow velocity on a fluid surface according to an example embodiment of this application;

FIG. 7 is a flowchart of a method for measuring a flow velocity on a fluid surface according to another example embodiment of this application;

FIG. 8 is a flowchart of a preprocessing process according to an example embodiment of this application;

FIG. 9 is a flowchart of a process in which a vision module performs preprocessing based on a to-be-processed video according to an example embodiment of this application;

FIG. 10 is a schematic diagram of a flow field vector direction according to an example embodiment of this application;

FIG. 11 is a schematic diagram of flow field vector classification according to an example embodiment of this application;

FIG. 12 is a schematic diagram of monitoring region division according to an example embodiment of this application;

FIG. 13 is a schematic diagram of monitoring region selection according to an example embodiment of this application;

FIG. 14 is a schematic diagram of flow-velocity vector decomposition in a multi-vision monitoring technology according to an example embodiment of this application;

FIG. 15 is a flowchart of a radar flow-velocity measurement process according to an example embodiment of this application;

FIG. 16 is a schematic diagram of an angle between a main beam of a radar module and a flow-velocity measurement line according to an example embodiment of this application;

FIG. 17 is a schematic diagram of principles of a method for measuring a flow velocity on a fluid surface according to an example embodiment of this application;

FIG. 18 is a schematic diagram of principles of a method for measuring a flow velocity on a fluid surface based on a radar-vision fusion flow-velocity measurement system according to another example embodiment of this application;

FIG. 19 is a flowchart of a method for measuring a flow velocity on a fluid surface according to another example embodiment of this application;

FIG. 20 is a block diagram of an apparatus for measuring a flow velocity on a fluid surface according to an example embodiment of this application; and

FIG. 21 is a block diagram of an apparatus for measuring a flow velocity on a fluid surface according to another example embodiment of this application.

**DESCRIPTION OF EMBODIMENTS**

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawings, the accompanying drawings are not necessarily drawn in proportion unless otherwise specified.

The specific term "example" herein means "used as an example, embodiment or illustration". Any embodiment described as "an example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

In conventional technologies, a visual flowmeter captures fluid surface features such as a water ripple or another natural floating object on a fluid surface by photographing an image, and extracts a space-time motion feature from the identified fluid surface feature, to calculate a movement velocity of the fluid surface feature in the image, to be specific, a flow velocity of a fluid. A test principle diagram of the visual flowmeter is shown in FIG. 2, where FIG. 2(a) is a schematic diagram of deployment of the visual flowmeter, and FIG. 2(b) is a schematic diagram of a flow-velocity field result obtained by using a visual flow-velocity algorithm. The visual flowmeter can capture high-definition images of a large fluid surface based on a wide-region lighting capability of a camera, so that a large-scale one-dimensional (1D) or two-dimensional (2D) surface flow-velocity field result can be outputted by using a flow-velocity calculation method. However, the camera faces two important challenges in actual field measurement: 1. Measurement results are inaccurate. In nighttime and weak natural light working conditions, rainstorms, haze weather, or uneven distribution (shadow/reflection) of light on a river surface, the camera cannot clearly capture the movement of a ripple on a fluid surface. As a result, the camera cannot provide a visual flow-velocity measurement algorithm with features that can be effectively extracted, causing inaccurate or invalid measurement results. In addition, a video flow-velocity measurement algorithm in conventional technologies cannot determine an actual measurement scenario, and therefore cannot effectively learn whether a current flow-velocity measurement result is accurate. For example, when there is a large floating object on a fluid surface, a movement velocity of the floating object cannot represent an actual flow velocity of a fluid due to gravity. If the floating object in this scenario cannot be determined and the flow velocity is calculated directly, the obtained flow velocity is an inaccurate result. 2. In conventional technologies, the video flow-velocity measurement algorithm cannot adaptively select a test region based on a field test environment. According to the national *Code for Liquid flow-velocity measurement in Open Channels*, abnormal flow fields such as eddy currents and countercurrents should be avoided in flow field distribution of the fluid in the test region. However, in conventional technologies, once a video flowmeter is deployed and installed, a field of view is fixed, and an observation region cannot be adjusted based on a change in an actual flow field. As a result, a large quantity of incorrect flow velocities occur in a flow-velocity measurement result.

A radar flowmeter is another common non-contact flow-velocity measurement device. In conventional technologies, a radar flowmeter is fastened above a fluid (mounted upside down under a bridge or by using an extension rod), and transmits an electromagnetic wave to irradiate a water ripple generated due to water flow. Because the water ripple has a movement velocity, Doppler effect is generated. The radar flowmeter parses out a Doppler signal including a flow velocity by receiving an electromagnetic wave reflected by the water ripple, and obtains a flow velocity of the water ripple through analysis and inversion based on a Doppler spectrum. In conventional technologies, a radar flowmeter of a microwave/millimeter wave frequency band has a high-speed resolution capability, and can obtain a precise flow-velocity result. In addition, the radar flowmeter is not affected by light change and climate change, and can work in all weathers. However, in conventional technologies, the radar flowmeter still has a problem of inaccurate measurement results: The radar flowmeter can only transmit a single beam and obtain an average flow velocity in a fluid surface range irradiated by the transmitted beam. According to the flow velocity-discharge calculation model shown in FIG. 1, to calculate a discharge by using the radar flowmeter, deduction needs to be performed from a single flow-velocity value of the radar flowmeter to obtain a multi-point flow velocity on a river cross section. Therefore, the method for calculating a cross-sectional discharge based on a single flow-velocity value of the radar flowmeter strongly depends on accuracy of the model. Generally, the model is fixed and therefore cannot adapt to a change in an actual flow field, resulting in inaccurate discharge measurement. A common solution in conventional technologies is to deploy a plurality of radar flowmeters at equal spacings along a fluid to obtain a multi-point surface flow velocity, to alleviate a strict requirement on the flow velocity-discharge model. In addition, once a radar is deployed, a beam direction of the radar remains unchanged. However, an actual field flow field is varied, and a beam measured by the radar is prone to other abnormal flow velocities, for example, interference of another floating object or turbulence in a test region. In conventional technologies, the beam direction of the radar cannot be flexibly adjusted based on a change in an actual flow field, so that a flow-velocity measurement result is prone to a large error.

In summary, a conventional single-sensor module (radar flowmeter or visual flowmeter) cannot meet the requirements of high-precision flow-velocity measurement. For example, the radar flowmeter can work full-time in all weathers, but can only measure a single-point flow velocity. As a result, the precision of a discharge measurement result strongly depends on the flow velocity-discharge model, and the radar flowmeter cannot effectively adapt to complex and variable field fluid environments. In addition, for example, a visual flowmeter can measure a 100-meter river width, but a camera cannot clearly capture natural features of a river surface when a lighting condition is poor, and therefore cannot accurately calculate a discharge. To be specific, a current non-contact flow-velocity monitoring device has limitations in scenarios or technologies, and cannot fully meet high-precision working requirements of a hydrographic device of the Ministry of Water Resources of China.

To meet a requirement of a high-precision discharge measurement result in current discharge monitoring scenarios such as flood prevention and water intake and use monitoring, embodiments of this application provide a radar/vision fusion flow-velocity measurement system (radar-vision fusion flow-velocity measurement system for short) and a high-precision method for measuring a flow velocity on a fluid surface based on the system. The system includes a vision module and a radar module.

Optionally, the vision module includes a camera. For example, a type of the camera is any one of a box camera, a small semi-dome camera, a large semi-dome camera, an all-in-one camera, and a dome camera. This is not limited in this embodiment of this application.

Optionally, the radar module uses a radar in a microwave frequency band (3-30 GHz) or a millimeter-wave frequency band (30-100 GHz). For example, a frequency band of the radar is selected based on a deployment space and a power consumption bearing capability. This is not limited in this embodiment of this application.

In addition, a conventional radar flowmeter or visual flowmeter in conventional technologies uses a fixed deployment/measurement manner, and an actual flow field changes greatly randomly. Consequently, measurement parameters cannot be flexibly adjusted based on actual flow field information in conventional technologies, resulting in low measurement precision. For example, a beam direction of a radar is fixed during deployment, and an optimal test region cannot be adaptively selected based on an actual flow field distribution. For example, once a visual flowmeter is deployed, a flow-velocity line location cannot be appropriately selected based on an actual flow field distribution, and a test result cannot be effectively outputted when a lighting condition is poor.

However, in the radar-vision fusion flow-velocity measurement system provided in this embodiment of this application, the vision module and the radar module may be deployed in a discrete deployment manner or an integrated deployment manner based on an actual deployment location.

The system may further include a fusion computing platform. The fusion computing platform may also be configured according to an actual deployment requirement and memory and computing power of each module, and may be independently deployed or disposed in the radar module or the vision module. The vision module is further configured to determine a second flow velocity on a fluid surface in a monitoring region based on a to-be-processed video. The fusion computing platform is configured to fuse a first flow velocity and the second flow velocity to obtain a third flow velocity on the fluid surface.

The radar-vision fusion flow-velocity measurement system may further include another sensor. The fusion computing platform may be further configured to further correct the determined third flow velocity on the fluid surface based on reference data inputted by the another sensor, to finally obtain a fourth flow velocity on the fluid surface. The another sensor may be a meteorological sensor and/or a contact measurement device. For example, the meteorological sensor includes a wind speed and direction sensor, a rainfall sensor, and the like. The contact measurement device includes a rotor flowmeter, a float flowmeter, an ultrasonic Doppler flowmeter, an acoustic Doppler current profiler, and the like. This is not limited in this embodiment of this application.

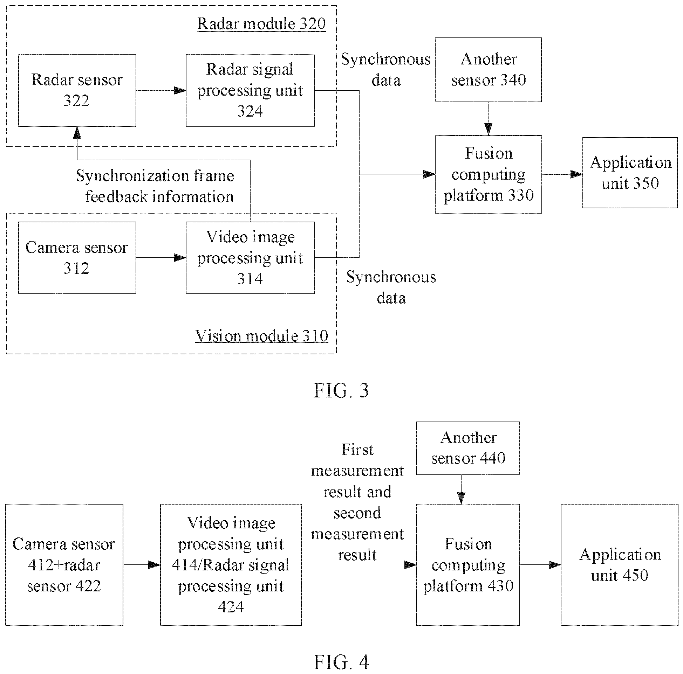

In a possible implementation, the vision module and the radar module are deployed in a discrete deployment manner. The vision module and the radar module synchronize signal frames through a bus or in a wireless mode. After obtaining synchronous data, the fusion computing platform performs fusion computing. For example, FIG. 3 is a schematic diagram of a structure of a radar-vision fusion flow-velocity measurement system. The system includes a vision module 310, a radar module 320, a fusion computing platform 330, another sensor 340, and an application unit 350. The vision module 310 includes a camera sensor 312 and a video image processing unit 314, the radar module 320 includes a radar sensor 322 and a radar signal processing unit 324, and the another sensor 340 and the application unit 350 are optionally virtual units.

The camera sensor 312 is configured to perform image acquisition on a fluid surface to obtain a to-be-processed video. The video image processing unit 314 is configured to: obtain candidate image frames in the to-be-processed video; determine a target image frame from the candidate image frames according to a preset rule; and determine a monitoring region on the fluid surface based on the target image frame. Optionally, the video image processing unit 314 is further configured to determine a second flow velocity on the fluid surface in the monitoring region based on the to-be-processed video. The video image processing unit 314 is further configured to send synchronization frame feedback information to the radar sensor 322. The radar sensor 322 is configured to: transmit a radar signal, and perform signal frame synchronization after receiving the synchronization frame feedback information. The radar signal processing unit 324 is configured to: transmit the radar signal to the monitoring region based on a location of the determined monitoring region by using the radar sensor 322 after the adjustment and a pose of the radar sensor 322; obtain point cloud data, where the point cloud data is obtained based on a reflected signal of the radar signal; and determine a first flow velocity on the fluid surface based on the point cloud data.

Both the video image processing unit 314 and the radar signal processing unit 324 are configured to send respective measurement results and synchronous data to the fusion computing platform 330. The fusion computing platform 330 is configured to fuse the first flow velocity and the second flow velocity to obtain a third flow velocity on the fluid surface. The fusion computing platform 330 is further configured to: further correct the determined third flow velocity based on reference data inputted by the another sensor, to finally obtain a fourth flow velocity on the fluid surface, and input the fourth flow velocity on the fluid surface into the application unit 350.

In another possible implementation, the vision module and the radar module are deployed in an integrated deployment manner. The vision module and the radar module are integrated on a same board. A same processor module is configured on the board to calculate the second flow velocity that needs to be outputted by the vision module and the first flow velocity that needs to be outputted by the radar module, and then the fusion computing platform determines a third flow velocity based on the first flow velocity and the second flow velocity. For example, FIG. 4 is a schematic diagram of a structure of a radar-vision fusion flow-velocity measurement system. The system includes a vision module, a radar module, a fusion computing platform 430, another sensor 440, and an application unit 450. The vision module includes a camera sensor 412 and a video image processing unit 414. The radar module includes a radar sensor 422 and a radar signal processing unit 424. The camera sensor 412 and the radar sensor 422 are integrated on a same board, the video image processing unit 414 and the radar signal processing unit 424 are integrated on the same processor module of the board, and the another sensor 440 and the application unit 450 are optionally virtual units.

The camera sensor 412 is configured to perform image acquisition on a fluid surface to obtain a to-be-processed video. The video image processing unit 414 is configured to: obtain candidate image frames in the to-be-processed video; determine a target image frame from the candidate image frames according to a preset rule; and determine a monitoring region on the fluid surface based on the target image frame. Optionally, the video image processing unit 414 is further configured to determine a second flow velocity on the fluid surface in the monitoring region based on the to-be-processed video. The radar sensor 422 is configured to transmit a radar signal. The radar signal processing unit 424 is configured to: transmit a radar signal to the monitoring region based on a location of the determined monitoring region by using the radar sensor 422 after the adjustment and a pose of the radar sensor 422; obtain point cloud data, where the point cloud data is obtained based on a reflected signal of the radar signal; and determine a first flow velocity on the fluid surface based on the point cloud data.

Both the video image processing unit 414 and the radar signal processing unit 424 are configured to send respective measurement results to the fusion computing platform 430. The fusion computing platform 430 is configured to fuse the first flow velocity and the second flow velocity to obtain a third flow velocity on the fluid surface. The fusion computing platform 430 is further configured to: further correct the determined third flow velocity based on reference data inputted by another sensor, to finally obtain a fourth flow velocity on the fluid surface, and input the fourth flow velocity on the fluid surface into the application unit 450.

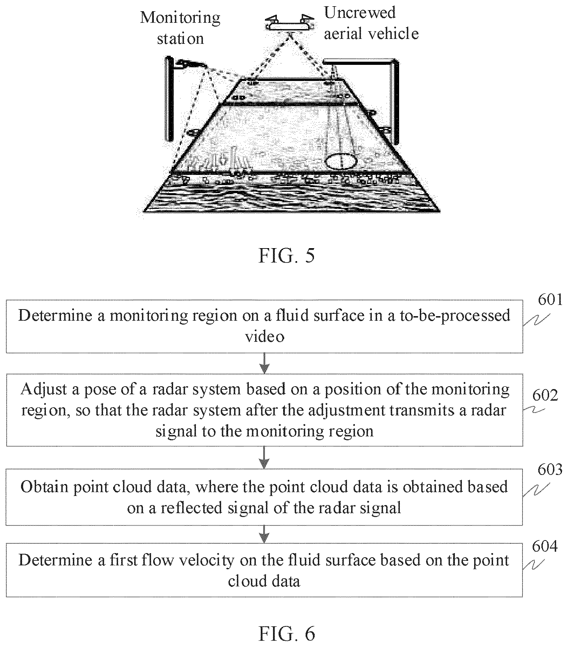

The radar-vision fusion flow-velocity measurement system provided in this embodiment of this application may be integrated into all hydrological monitoring stations, including a mobile monitoring station (for example, an uncrewed aerial vehicle-based water discharge monitoring station invoked during flood control) or a ground fixed monitoring station (for example, a conventional attended hydrological monitoring station or a novel unattended monitoring station "all-in-one pole"), as shown in FIG. 5. The vision module, the radar module, and the fusion computing platform can be deployed in a discrete deployment manner or an integrated deployment manner on monitoring stations of different manners according to actual requirements. If the discrete deployment manner is used, the time and space coordinate systems need to be aligned. First, the vision module preprocesses an acquired to-be-processed video, to determine whether a scenario corresponding to the to-be-processed video is an executable monitoring scenario. Then, in the executable monitoring scenario, the vision module determines a fluid flow field vector direction and performs clustering analysis on a flow field vector direction by using a specified algorithm (for example, a large scale particle image velocimetry (Large Scale Particle Image Velocimetry, LSPIV) algorithm or a space-time image velocimetry (Space-Time Image Velocimetry, STIV) algorithm), and determines an appropriate monitoring region based on a clustering result. Second, based on the determined monitoring region, the vision module performs one-dimensional or two-dimensional flow-velocity field calculation on the region to obtain the second flow velocity, and the radar module may adaptively adjust a pose of a radar, so that a transmitted beam of the radar module points to the monitoring region, to calculate an average flow-velocity value, namely, the first flow velocity, in a range of a beam irradiated in the monitoring region. Finally, the vision module and the radar module send respective measurement results to the fusion computing platform. The fusion computing platform performs a flow velocity interpolation operation on the second flow velocity and the first flow velocity to obtain a flow velocity on the fluid surface, and may further perform flow-velocity correction on the flow velocity on the fluid surface based on data inputted by another sensor, to finally obtain the fourth flow velocity, namely, a high-precision flow-velocity measurement result.

The following describes, by using several example embodiments, the method for measuring a flow velocity on a fluid surface provided in embodiments of this application.

FIG. 6 is a flowchart of a method for measuring a flow velocity on a fluid surface according to an example embodiment of this application. This embodiment is described by using an example in which the method is applied to the radar-vision fusion flow-velocity measurement system shown in FIG. 3 or FIG. 4. The method includes several steps below.

Step 601: Determine a monitoring region on a fluid surface in a to-be-processed video.

Optionally, a vision module obtains the to-be-processed video, where the to-be-processed video includes the fluid surface; and determines the monitoring region on the fluid surface based on the to-be-processed video.

Optionally, the vision module performs video acquisition on the fluid surface to obtain the to-be-processed video. Optionally, the fluid surface includes a liquid surface. For example, the fluid surface includes a water body surface or a river body surface.

Optionally, the vision module preprocesses the acquired to-be-processed video by using a first preset technology, selects a target image frame from the to-be-processed video, and determines the monitoring region on the fluid surface based on the target image frame.

Optionally, the first preset technology includes at least one of a technology for identifying a distribution density of fluid surface features, an artificial intelligence (Artificial Intelligence, AI)-based image target identification technology, and a technology for determining a lighting condition of a river cross section.

For example, the vision module determines, based on an AI image recognition technology, whether a non-natural floating object exists in the to-be-processed video, and selects an executable monitoring scenario based on a determining result. In the executable monitoring scenario, the vision module further determines and classifies a lighting condition of a river cross section and a distribution density of fluid surface features, and selects a target scenario of visual flow-velocity measurement and different methods for measuring a flow velocity in different fluid surface features.

It should be noted that, for a process of determining the monitoring region on the fluid surface based on the to-be-processed video, refer to related details in the following embodiments. Details are not described herein.

Optionally, the target image frame includes at least two image frames, and the image frames are image frames on which the fluid surface is displayed.

Optionally, the vision module determines monitoring region location information on the fluid surface based on the selected target image frame, where the monitoring region location information indicates a location of the monitoring region.

Step 602: Adjust a pose of a radar system based on a location of the monitoring region, so that the adjusted radar system transmits a radar signal to the monitoring region.

Optionally, the radar module adaptively adjusts the pose of the radar system based on the location of the monitoring region determined by the vision module, and a main beam direction of the adjusted radar system faces the monitoring region.

Optionally, the pose of the radar system includes a location and an angle of the radar system.

Step 603: Obtain point cloud data, where the point cloud data is obtained based on a reflected signal of the radar signal.

Optionally, after adjusting the pose of the radar system, the radar module transmits the radar signal to the monitoring region, and obtains the point cloud data based on the reflected signal of the radar signal. For example, the point cloud data includes three-dimensional coordinates that respectively correspond to a plurality of ground light spots.

Step 604: Determine a first flow velocity on the fluid surface based on the point cloud data.

Optionally, the radar module performs angle self-calibration based on the point cloud data, and performs high-resolution flow-velocity estimation by using a super-resolution Doppler spectrum estimation algorithm, to obtain the first flow velocity on the fluid surface.

It should be noted that, for related descriptions of a high-precision radar flow-velocity measurement technology for adaptive pose adjustment, refer to related details in the following embodiments. Details are not described herein.

Optionally, the vision module determines a second flow velocity on the fluid surface in the monitoring region based on the to-be-processed video.

Optionally, the vision module performs visual flow-velocity measurement based on the to-be-processed video to determine the second flow velocity on the fluid surface in the monitoring region.

Optionally, a visual flow-velocity measurement technology includes at least one of a technology for identifying and classifying a flow field vector direction, a technology for selecting an adaptive test region, and a fusion velocity measurement technology using a multi-vision flow-velocity algorithm.

For example, the vision module calculates and classifies a flow field vector direction of a flow velocity on the fluid surface by using an LSPIV algorithm, to obtain a flow field vector classification result, adaptively selects a monitoring region based on the flow field vector classification result, and measures a visual flow velocity in the monitoring region by using a velocity measurement algorithm, to obtain the second flow velocity, where the velocity measurement algorithm is selected based on distribution densities of different fluid surface features.

For example, the vision module performs visual flow-velocity measurement on a water flow region by using the velocity measurement algorithm, to obtain a first candidate measurement result, and performs interpolation and/or mutual calibration on the first candidate measurement result to obtain the second flow velocity, to implement high-precision fusion flow-velocity measurement between visual algorithms.

It should be noted that, for related descriptions of a visual flow-velocity measurement technology using a high-precision and adaptive measurement region adjustment, refer to related details in the following embodiments. Details are not described herein.

Optionally, the radar module sends the first flow velocity to a fusion computing platform, the vision module sends the second flow velocity to the fusion computing platform, and the fusion computing platform receives the second flow velocity and the first flow velocity, and determines a third flow velocity based on the second flow velocity and the first flow velocity by using a fusion flow-velocity measurement technology.

Optionally, the fusion flow-velocity measurement technology includes a multi-scenario radar-vision flow-velocity mutual-calibration technology. Optionally, the fusion flow-velocity measurement technology further includes a multi-meteorological sensor fusion flow-velocity correction technology.

For example, the radar module measures a radar flow velocity, and the vision module flexibly selects different velocity measurement algorithms based on different lighting conditions. After receiving the second flow velocity sent by the vision module and the first flow velocity sent by the radar module, the fusion computing platform performs flow velocity interpolation and/or radar-vision flow-velocity mutual calibration to obtain the third flow velocity on the fluid surface, to implement high-precision radar-vision fusion flow-velocity measurement.

For example, the fusion computing platform receives reference data inputted by another sensor, and performs flow-velocity correction on the determined third flow velocity on the fluid surface based on the reference data inputted by the another sensor to obtain a fourth flow velocity, to finally implement a high-precision radar-vision fusion flow-velocity measurement technology.

Optionally, the flow velocity (the first flow velocity, the second flow velocity, the third flow velocity, or the fourth flow velocity) on the fluid surface is a flow velocity of a fluid on the fluid surface under the action of gravity, and is usually represented by a flow velocity of a water ripple on the fluid surface.

It should be noted that, for related descriptions of the fusion flow-velocity measurement technology, refer to related details in the following embodiments. Details are not described herein.

In summary, in this embodiment of this application, a monitoring region on a fluid surface in a to-be-processed video is determined, and a pose of a radar system is adjusted based on a location of the monitoring region, so that the adjusted radar system transmits a radar signal to the monitoring region. To be specific, a pose of a radar is adaptively adjusted based on visual information, and an undesirable observation region is avoided, so that a first flow velocity on a fluid surface is determined based on point cloud data corresponding to a radar signal, and precision of a flow-velocity measurement result is ensured.

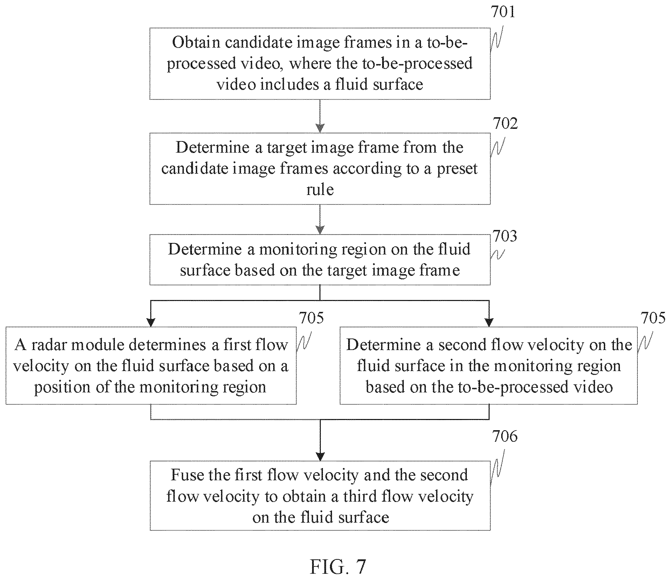

FIG. 7 is a flowchart of a method for measuring a flow velocity on a fluid surface according to another example embodiment of this application. This embodiment is described by using an example in which the method is applied to the radar-vision fusion flow-velocity measurement system shown in FIG. 3 or FIG. 4. The method includes several steps below.

Step 701: Obtain candidate image frames in a to-be-processed video, where the to-be-processed video includes a fluid surface.

In watershed flood control and water resource management and dispatching scenarios, for detection of a water volume, a flow is usually observed based on measurement of a flow velocity on a fluid surface and in combination with a cross-sectional form of a measured flow-velocity region on the surface. The flow velocity on the fluid surface is a flow velocity of a fluid on the fluid surface under the action of gravity, and is usually represented by a flow velocity of a water ripple on the fluid surface. However, on an actual field fluid surface, there is usually interference of various floating objects such as leaves, branches and floating logs, swimming creatures, and even various fluid waste. However, the flow velocities of these floating objects are not consistent with the flow velocity on the fluid surface due to gravity and movement of the floating objects. However, current flow-velocity monitoring technologies are not capable of determining and removing these scenarios/floating objects. As a result, a final flow velocity is not a true flow velocity on the fluid surface, and a final water volume is incorrectly calculated. In addition, flow-velocity measurement precision of a current visual flow-velocity measurement technology affects light of a detected scenario, and measurement cannot be performed in a case of strong light and noise. In addition, in a case of fog, haze, or the like, a water ripple on the fluid surface cannot be clearly seen, and therefore flow-velocity measurement cannot be performed. Finally, a current visual flow-velocity measurement method includes velocity measurement algorithms including an LSPIV algorithm and an STIV algorithm. The LSPIV algorithm is more suitable for flow-velocity measurement when the distribution of fluid surface features is relatively dense, and the STIV algorithm can be used for flow-velocity measurement when the distribution of fluid surface features is sparse.

In this embodiment of this application, to make a flow-velocity measurement technology more adaptable to a field measurement scenario and provide scenario understanding and support for a visual flow-velocity monitoring technology, a vision module performs video acquisition on the fluid surface to obtain the to-be-processed video, and determines the candidate image frames from the to-be-processed video. The candidate image frames are at least one image frame in the to-be-processed video.

The candidate image frames may be all image frames of the to-be-processed video, or may be image frames obtained through sampling in the to-be-processed video, or may be image frames obtained after preselection is performed on the to-be-processed video. This is not limited in this embodiment of this application.

The vision module preprocesses the candidate image frames before performing flow-velocity monitoring, that is, performs step 702.

Step 702: Determine a target image frame from the candidate image frames according to a preset rule.

Optionally, the target image frame includes at least one image frame, and the target image frame includes the fluid surface.

Optionally, the target image frame is an image frame that meets the preset rule, and the preset rule includes that the target image frame does not include a non-natural floating object; or the preset rule includes that a lighting condition of the target image frame meets a preset lighting condition.

Optionally, the non-natural floating object is a floating object whose size is greater than a preset size threshold or a floating object of a preset type. For example, the preset size threshold is set by default or is set in a customized manner. The preset type is set by default or is set in a customized manner. For example, the non-natural floating object includes a large floating log, a swimming creature, and a hull. Such an object affects a flow-velocity measurement result. This is not limited in this embodiment of this application.

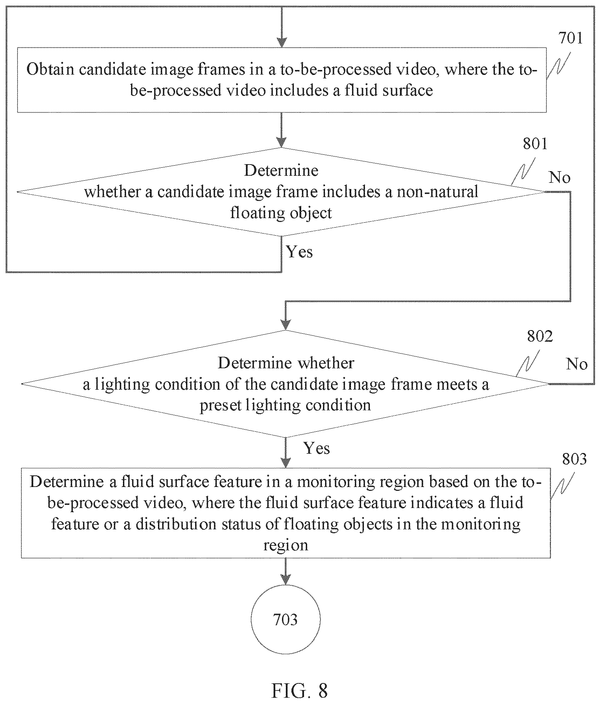

In a possible implementation, for each image frame in the candidate image frames, the preprocessing the image frame includes, but is not limited to, the following three steps, as shown in FIG. 8:

Step 801: Determine whether a candidate image frame includes a non-natural floating obj ect.

The non-natural floating object is a floating object whose size is greater than a preset size threshold or a floating object of a preset type.

Optionally, the vision module determines, by using an AI image recognition technology, whether the candidate image frame includes a non-natural floating object.

If the candidate image frame includes a non-natural floating object, the foregoing step 701 is performed again; or if the candidate image frame does not include a non-natural floating object, step 802 is optionally performed.

In a possible implementation, the vision module invokes, based on the candidate image frame, a pre-trained floating object recognition model to output a first determining result, where the first determining result includes a first identifier or a second identifier, the first identifier indicates that a current test region includes a non-natural floating object, and the second identifier indicates that the current test region does not include a non-natural floating object; and if the first determining result is the first identifier, step 701 is performed again. If the first determining result is the second identifier, step 802 is performed.

Step 802: Determine whether a lighting condition of the candidate image frame meets a preset lighting condition.

The lighting condition of the fluid surface is a lighting condition of the fluid surface in the candidate image frame.

Optionally, the vision module determines, by using a river cross-sectional reflection status, whether the lighting condition of the fluid surface meets the preset lighting condition, to determine whether the current test region meets a measurement condition. If the lighting condition of the fluid surface does not meet the preset lighting condition, step 701 is performed again. If the lighting condition of the fluid surface meets the preset lighting condition, the candidate image frame is determined as the target image frame, and the current test region is an observable region. Optionally, step 803 is performed.

In a possible implementation, the vision module invokes, based on the to-be-processed video, a pre-trained lighting recognition model to output a second determining result. Optionally, the second determining result includes a third identifier or a fourth identifier. The third identifier indicates that the lighting condition of the fluid surface does not meet the preset lighting condition, to be specific, the lighting condition of the candidate image frame is relatively poor, indicating that a fluid surface feature cannot be recognized currently. The fourth identifier indicates that the lighting condition of the fluid surface meets the preset lighting condition, to be specific, the lighting condition of the candidate image frame is acceptable or good, and further target recognition may be performed. If the second determining result is the third identifier, the foregoing step 701 is performed again; or if the second determining result is the fourth identifier, the candidate image frame is determined as the target image frame, and step 803 is optionally performed.

Step 803: Determine a fluid surface feature of a monitoring region based on the to-be-processed video, where the fluid surface feature indicates a fluid feature or distribution of floating objects in the monitoring region.

Optionally, the fluid surface feature includes a fluid feature or a distribution quantity or distribution density of the floating objects in the monitoring region. The fluid feature is also referred to as a natural feature, for example, a water ripple generated by flow. The floating objects include objects that automatically float with the fluid surface. Such objects can be used as tracers to assist in flow-velocity measurement. The vision module identifies and classifies a distribution density of fluid surface features by using an image recognition technology.

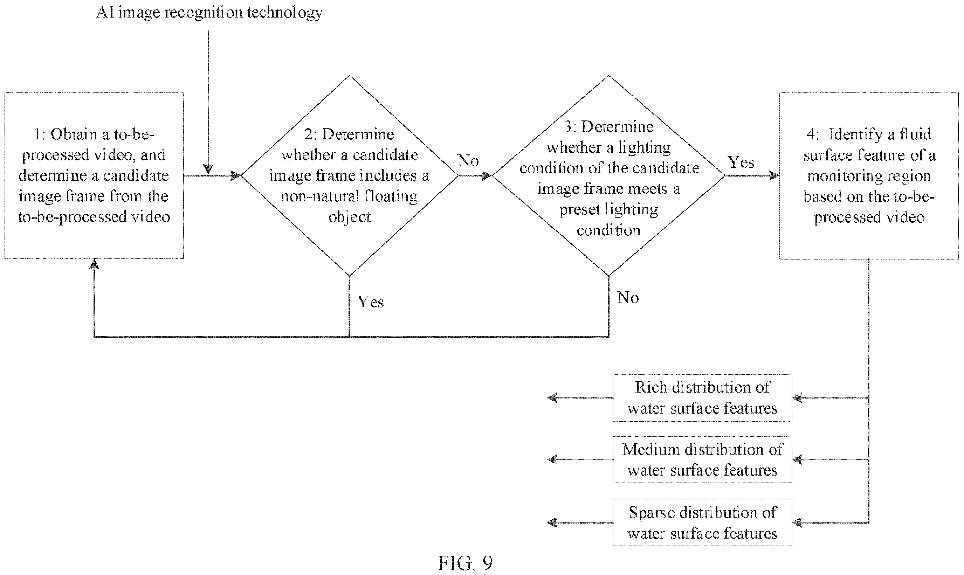

In an example, as shown in FIG. 9, a process in which the vision module performs preprocessing based on the to-be-processed video includes, but is not limited to, the following steps: Step 1: Obtain the to-be-processed video, and determine a candidate image frame from the to-be-processed video. Step 2: Determine, by using the AI image recognition technology, whether the candidate image frame includes a non-natural floating object; and if the candidate image frame includes a non-natural floating object, perform step 1 again; or if the candidate image frame does not include a non-natural floating object, continue to perform step 3. Step 3: Determine that a lighting condition of the candidate image frame meets the preset lighting condition; if the lighting condition meets the preset lighting condition, determine the candidate image frame as the target image frame, determine a monitoring region on the fluid surface, and continue to perform step 4; or if the lighting condition does not meet the preset lighting condition, perform step 1 again. Step 4: Identify the fluid surface feature of the monitoring region based on the to-be-processed video, where an outputted identification result indicates the fluid feature or the distribution of the floating objects in the monitoring region, for example, rich distribution of fluid surface features, medium distribution of fluid surface features, and sparse distribution of fluid surface features.

Optionally, the candidate image frame includes a plurality of image frames. For each image frame, the foregoing preprocessing is performed on the image frame, to finally select the target image frame.

Step 703: Determine the monitoring region on the fluid surface based on the target image frame.

Optionally, the vision module determines the monitoring region on the fluid surface based on the target image frame, where a flow-velocity measurement line of the monitoring region is in a direction of fluid flow, and/or the monitoring region does not include a non-natural floating object, and the non-natural floating object is a floating object whose size is greater than a preset size threshold or a floating object of a preset type.

In a possible implementation, the vision module determines a plurality of flow field vector directions in the target image frame; and determines, as the monitoring region, a sub-region whose flow field vector direction is in the direction of fluid flow, and determines a flow field vector of the monitoring region as the flow-velocity measurement line.

For example, a process in which the vision module determines the monitoring region on the fluid surface based on the target image frame includes, but is not limited to, the following steps:

1. The LSPIV algorithm is used to calculate a flow field distribution in a horizontal rectangular coordinate system $[\alpha, \beta]$ of a current fluid plane (where $\alpha$ and $\beta$ are two direction components of the rectangular coordinate system), obtain a direction correlation value of a flow field on the fluid surface, and represent a flow-velocity vector as $\vec{v}_i = [v_{\alpha,i}, v_{\beta,i}]$, where $v_{\alpha,i}$ and $v_{\beta,i}$ are respectively flow velocities at a coordinate location of $[\alpha_i, \beta_i]$, and at the same time mark a pixel location $[\alpha_i, \beta_i]$ of the coordinate location.

2. A flow-velocity directivity feature is obtained by normalizing a modulus value: a direction vector of each flow-velocity vector in the monitoring region is obtained through calculation, for example, a schematic diagram of a flow field vector direction shown

$$\widetilde{\alpha}_i = \frac{\alpha_i}{\sqrt{\alpha_i^2 + \beta_i^2}}$$

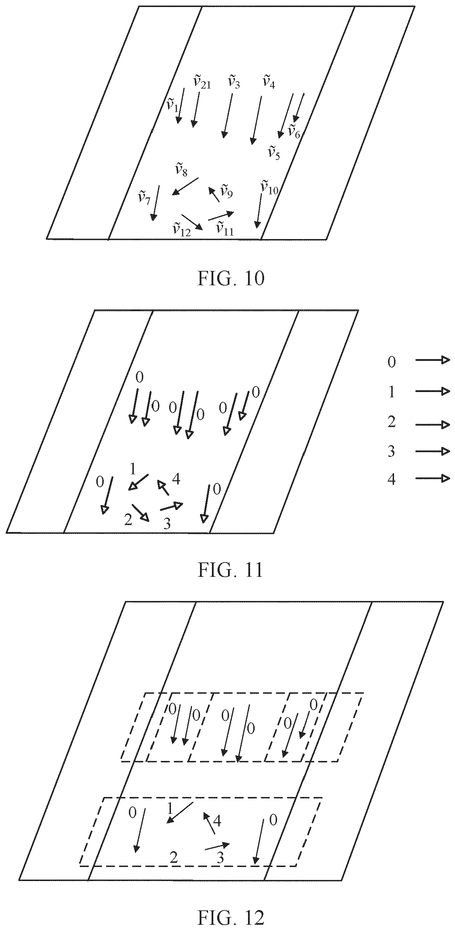

in FIG. 10, where $\widetilde{v}_i = [\widetilde{\alpha}_i, \widetilde{\beta}_i]$, where

$$\widetilde{\beta}_i = \frac{\beta_i}{\sqrt{\alpha_i^2 + \beta_i^2}}$$

and .

3. N normalized vectors $\widetilde{v}_i$ are clustered (for example, a clustering method includes DBSCAN, affine propagation clustering, and the like), so that correlation values in a same direction (to be specific, corresponding flow-velocity vector angles are in a same range) are classified into a same type.

In an example, FIG. 11 is a schematic diagram of flow field vector classification according to an example embodiment of this application. The figure shows five different classification results, and the five classification results include five different azimuth ranges (generally, all azimuth ranges do not overlap, and a set of the azimuth ranges is 360°). Generally, a classification result 0 is a classification result suitable for video flow-velocity measurement, and represents that all directions of the flow-velocity vector are in an angle range near an $\alpha$ axis, to be specific, represents that a direction of the flow-velocity vector is the direction of fluid flow. It should be noted that a flow field vector classification manner is not limited in this embodiment of this application.

4. Sub-region division and intra-region turbulence are determined. Optionally, that the vision module performs sub-region division and intra-domain turbulence includes, but is not limited to, the following four steps:

(1). The monitoring region, to be specific, the fluid surface, is divided into a plurality of sub-regions along the fluid, where a width of each sub-region is a single pixel, a length of the sub-region is a rectangular region of a length of a fluid cross section, a category to which vectors in each sub-region belong is counted, and a quantity of categories is counted. In an example, FIG. 12 is a schematic diagram of monitoring region division according to an example embodiment of this application.

(2). Count a quantity n of categories and a quantity $m_j$ of members of each category (the quantity of members of a $j^{th}$ category in the n categories) in a sub-region.

(3). When the quantity n of categories and the quantity $m_j$ of members of each category meet a preset valid condition, determine that the sub-region is a valid test region. Optionally, the preset valid condition is: $n \le n_{th} \& \forall m_j \ge m_{th}$, to be specific, the quantity of categories is less than a first threshold $n_{th}$ and the largest category; and the quantity of members is greater than a second threshold $m_{th}$, and values of $n_{th}$ and $m_{th}$ are determined based on a river width. The valid test region is a sub-region that has no turbulence and meets a test condition.

(4). When the quantity n of categories and the quantity $m_j$ of members of each category do not meet the preset valid condition, determine that the sub-region is an invalid test region. To be specific, the sub-region may have turbulence and does not meet the test condition.

Optionally, each sub-region is further divided to obtain a plurality of secondary sub-regions, statistics on categories and category members are collected according to the foregoing procedure, and different thresholds are set to determine whether there is turbulence in the secondary sub-regions, to be specific, whether the secondary sub-regions are valid test regions.

5. Determine a monitoring region in which a flow-velocity measurement line is located.

Optionally, a sub-region with a minimum quantity of classes is selected from the determined valid test region as the monitoring region in which the flow-velocity measurement line is located, and a coordinate location of a vector direction with a maximum quantity of class members in the sub-region is a coordinate location of the flow-velocity measurement line, which may be represented as

$$\vec{d}_{video} = \left[\vec{d}_{video}^{0}, \ldots, \vec{d}_{video}^{k}, \ldots, \vec{d}_{video}^{K}\right]$$

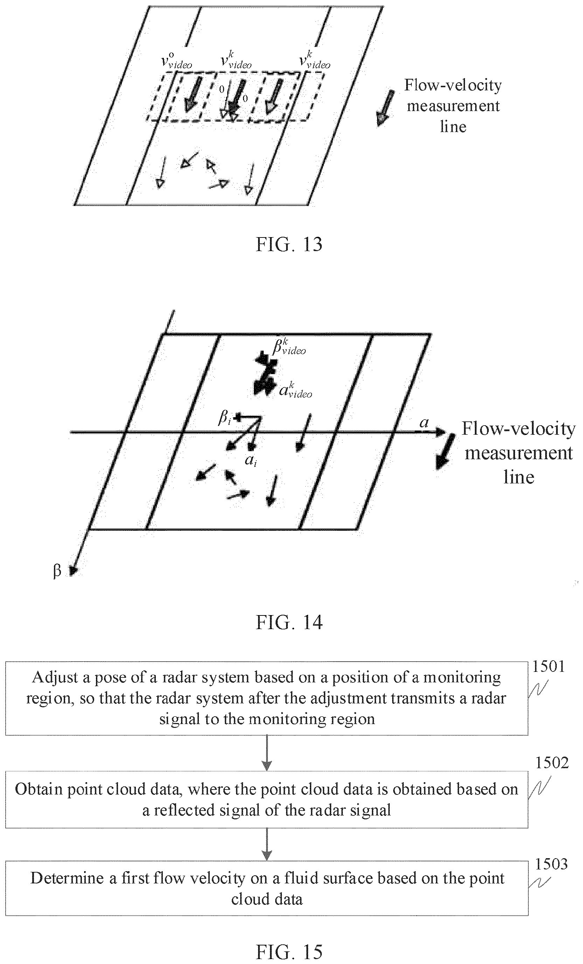

, where $k \in \{0, 1, 2, 3, \ldots, K\}$ indicates that there are K flow-velocity measurement lines in the monitoring region. In an example, FIG. 13 is a schematic diagram of monitoring region selection according to an example embodiment of this application.

Optionally, after the monitoring region is selected, a flow-velocity measurement line of the secondary sub-region is determined based on the divided secondary sub-region, and the flow-velocity measurement line of each secondary sub-region forms a discrete measurement set of the flow-velocity measurement line within an entire river width.

Step 704: Determine a second flow velocity on the fluid surface in the monitoring region based on the to-be-processed video.

Generally, a river section for a flow-velocity test should be located in a region without large stones, large vortices, or turbulence. The river section should be straight, stable, and concentrated. There should be no shunt fork, slant, or backflow. However, the field fluids that are observed in actual flow-velocity observation have a great many changes, the flow field may be affected by the earth rotation and climate, and there are occasional abnormal test flow field regions. According to a flow velocity-discharge deduction model, a flow-velocity vector required for calculating a discharge should be in a straight direction of the fluid as much as possible. However, a non-contact flow-velocity monitoring instrument in conventional technologies cannot analyze a flow-velocity vector of an observed region, but directly monitors a flow velocity on the fluid surface. Such a monitoring manner causes poor data quality and low precision of a flow-velocity calculation result.

In this embodiment of this application, optionally, after determining the fluid surface feature of the monitoring region based on the to-be-processed video, the vision module determines a velocity measurement algorithm based on the fluid surface feature; and determines the second flow velocity on the fluid surface in the monitoring region based on the to-be-processed video by using the velocity measurement algorithm.

Optionally, that the fluid surface feature indicates the fluid feature or the distribution density of the floating objects in the monitoring region is used as an example. If the fluid surface feature is in a first level, the velocity measurement algorithm is determined as a cross-correlation algorithm or an autocorrelation algorithm. If the fluid surface feature is in a second level, the velocity measurement algorithm is determined as an autocorrelation algorithm, where fluid features or distribution densities of the floating objects in the monitoring region corresponding to the first level and the second level decrease sequentially.

It should be noted that a level classification manner of the fluid surface feature is not limited in this embodiment of this application. For example, the fluid surface feature may be further classified into three levels. If the fluid surface feature is in the first level or the second level, the velocity measurement algorithm is determined as a cross-correlation algorithm or an autocorrelation algorithm. If the fluid surface feature is in a third level, the velocity measurement algorithm is determined as an autocorrelation algorithm, where fluid features or distribution densities of the floating objects in the monitoring region respectively corresponding to the first level, the second level, and the third level decrease sequentially. For example, the first level indicates that rich distribution of fluid surface features, the second level indicates medium distribution of fluid surface features, and the third level indicates sparse distribution of fluid surface features. A classification result may assist the vision module in selecting different flow-velocity measurement methods.

The cross-correlation algorithm includes an algorithm for determining a flow velocity based on pixel blocks at different locations in two image frames, the cross-correlation algorithm indicates a correlation degree between pixel blocks at different locations in the two image frames, and each pixel block includes at least one pixel. Optionally, the cross-correlation algorithm indicates a degree of correlation between pixel blocks at adjacent locations in two adjacent image frames.

The autocorrelation algorithm includes an algorithm for determining a flow velocity based on pixel blocks at a same location in two image frames, the autocorrelation algorithm indicates a degree of correlation between pixel blocks at a same location in the two image frames, and each pixel block includes at least one pixel. Optionally, the autocorrelation algorithm indicates a degree of correlation between pixel blocks at a same location in two adjacent image frames.

Optionally, the cross-correlation algorithm includes an LSPIV algorithm, and the autocorrelation algorithm includes an STIV algorithm. The LSPIV algorithm is not suitable for a case of sparse distribution of fluid surface features, and the STIV algorithm can be used for a sparse/dense distribution state of the fluid surface feature.

In a possible implementation, if the fluid surface feature is in the second level, the velocity measurement algorithm is determined as the STIV algorithm, to be specific, the STIV algorithm is used to perform one-dimensional flow-velocity vector field measurement in an extremely low flow-velocity scenario. In another possible implementation, if the fluid surface feature is in the first level, the velocity measurement algorithm is determined as the LSPIV algorithm or the STIV algorithm, to be specific, in most fluid velocity measurement scenarios, the LSPIV algorithm or the STIV algorithm is used to perform two-dimensional flow-velocity vector field measurement.

It should be noted that, generally, a probability of occurrence of the first possible implementation is far smaller than that of the second possible implementation, because targets that can be used for calculating a flow velocity include not only a natural water ripple existing on the fluid surface but also some other features such as leaves that float with the fluid. Therefore, for the foregoing second possible implementation, to accurately measure the flow velocity on the fluid surface, in this embodiment of this application, flow field vector identification and classification are performed on the selected target image frame based on functional features of the two algorithms. After determining the monitoring region on the fluid surface and the flow-velocity measurement line of the monitoring region, the vision module performs fusion flow-velocity measurement based on the monitoring region and the flow-velocity measurement line of the monitoring region by using the STIV algorithm and the LSPIV algorithm, to obtain visual two-dimensional flow-velocity field information, to be specific, the second flow velocity, on the fluid surface.

Optionally, that the vision module performs flow fusion measurement based on a multi-vision monitoring technology to obtain the second flow velocity includes, but is not limited to, the following four steps:

(1) Calculate a flow velocity on a flow-velocity measurement line by using an STIV algorithm: After the flow-velocity measurement line of the monitoring region is obtained, estimate a one-dimensional flow-velocity distribution value according to the STIV algorithm, to obtain

$$\vec{v}_{video} = \left[\vec{v}^0_{video}, \ldots \vec{v}^k_{video}, \ldots, \vec{v}^K_{video}\right],$$

where the flow-velocity distribution value includes measured values $\vec{v}^k_{video}$ of K flow-velocity measurement lines in the monitoring region.

(2) Perform flow-velocity vector decomposition: Decompose a flow velocity $\vec{v}_{video} = \left[v^0_{video}, \ldots, v^K_{video}\right]$ on the flow-velocity measurement line obtained by using the STIV algorithm in a rectangular coordinate system of the fluid surface, to obtain flow-velocity components in an x direction and a y direction respectively:

$$\vec{v}^k_{video} = \left[\alpha^k_{video}, \beta^k_{video}\right], i \in \{1, 2, 3, \ldots, N\}.$$

In an example, FIG. 14 is a schematic diagram of flow-velocity vector decomposition in a multi-vision monitoring technology according to an example embodiment of this application.

(3) Perform fusion flow-velocity measurement by using an STIV algorithm and an LSPIV algorithm: Perform interpolation on components in two directions of the rectangular coordinate system $(\alpha, \beta)$ on vector flow-velocity components $v_{\alpha,i}$ and $v_{\beta,i}$, $i \in \{1, 2, 3, \ldots, N\}$ of a two-dimensional flow-velocity field obtained by using the LSPIV algorithm and vector flow-velocity components $\alpha^k_{video}$ and $\beta^k_{video}$ ($k \in \{1, 2, 3, \ldots, K\}$) obtained by using the STIV algorithm, where the interpolation includes, but is not limited to, a one-dimensional or two-dimensional linear and non-linear interpolation algorithm.

(4) Output a second flow velocity: Two-dimensional sub-pixel-level high-resolution two-dimensional flow-velocity vector field information, to be specific, visual two-dimensional flow-velocity field information:

$$\vec{v}^{syn}_{i,video} = \left[\alpha^{syn}_i, \beta^{syn}_i\right], i \in \{1, 2, 3, \ldots, N\}.$$

Step 705: A radar module determines a first flow velocity on the fluid surface based on a location of the monitoring region.

In conventional technologies, a radar flow-velocity measurement device irradiates the fluid surface by transmitting an electromagnetic wave signal having a single beam direction, and further obtains a movement velocity of a water ripple on the fluid surface by reflecting a Doppler signal in an echo signal of a fluid. Because a beam of a radar has a particular range, the obtained velocity of the water ripple is an average flow velocity of the movement of all water ripples on the fluid surface within a beam radiation range of the beam. However, in an actual field flow-velocity monitoring scenario, similar to a current video flow-velocity monitoring method, the radar cannot determine whether a current region irradiated by a beam is a region including turbulence or another abnormal monitoring region, and therefore cannot determine whether an obtained flow-velocity measurement result meets a requirement.

To resolve the foregoing problem, embodiments of this application provide a radar adaptive pose adjustment and high-resolution velocity estimation method based on visual flow field information. The determining a first flow velocity on the fluid surface based on a location of the monitoring region includes, but is not limited to, the following steps, as shown in FIG. 15:

Step 1501: Adjust a pose of a radar system based on a location of the monitoring region, so that the adjusted radar system transmits a radar signal to the monitoring region.

Optionally, during initial deployment of the radar module, a projection of a radar main beam pointing to a horizontal direction is parallel to a fluid line, and a main beam of the radar module is a beam whose wave velocity direction points to a to-be-measured flow region.

Optionally, the radar module adjusts a pose of the radar module based on relative locations of the radar module and the vision module and the monitoring region, and a primary beam of the radar module after the adjustment is located on any one or more flow-velocity measurement lines.

For example, the radar module adjusts the direction of the main beam of the radar module (to be specific, a downward-view angle $\beta$) in a vertical direction based on the relative locations of the radar module and the vision module and the monitoring region $\vec{d}_{video}$ =

$$\left[\vec{d}_{video}^{0}, \ldots, \vec{d}_{video}^{k}, \ldots, \vec{d}_{video}^{K}\right]$$

, so that the main beam of the radar module is located on any one or several flow-velocity measurement lines, to be specific, the adjusted radar system transmits a radar signal to the monitoring region.

Optionally, the first flow velocity measured by the radar module includes an average flow velocity in an irradiation range of a beam of the radar module on the fluid surface. Optionally, the first flow velocity measured by the radar module includes a flow velocity corresponding to a central point location of the monitoring region, and a coordinate location of a central point may be represented as $d_{loc}$. In this way, adaptive beam modulation based on visual flow-velocity measurement information (including the monitoring region) of the radar module is completed.

Step 1502: Obtain point cloud data, where the point cloud data is obtained based on a reflected signal of the radar signal.

Optionally, after adjusting the pose of the radar system, the radar module transmits the radar signal (also referred to as a transmitted signal) to the monitoring region, and obtains the point cloud data based on the reflected signal of the radar signal.

Optionally, the point cloud data includes Doppler information of the radar module. For example, the radar module determines the Doppler information of the radar module by using a super-resolution spectrum estimation algorithm. The Doppler information includes a Doppler frequency, to be specific, a frequency difference between a frequency of the reflected signal and a frequency of the transmitted signal.

Step 1503: Determine the first flow velocity on the fluid surface based on the point cloud data.

Optionally, the radar module obtains radar pose information after the adjustment, where the radar pose information indicates an angle of the radar module after the adjustment; and determines the first flow velocity on the fluid surface based on the point cloud data and the radar pose information of the radar module.

Optionally, the radar module obtains radar pose information after the adjustment by using a built-in angle detector, where the radar pose information indicates an angle of the radar module. For example, the radar pose information includes a vertical angle and a horizontal angle that are between the main beam of the radar module and a location of a beam center point and that are measured by the angle detector.

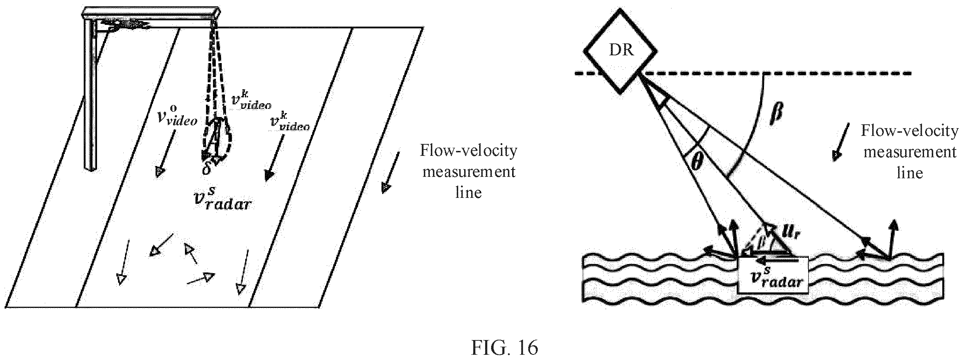

Optionally, the radar module automatically measures a vertical angle $\beta$ of the radar by using a built-in angle detector, and triggers the radar module to start acquiring an echo signal. A horizontal angle between the main beam of the radar module and the flow-velocity measurement line is represented as $\delta$, and a vertical angle between a radar antenna beam and the flow-velocity measurement line is represented as $\beta$, as shown in FIG. 16. The horizontal angle $\delta$ and the vertical angle $\beta$ need to be further fed back to a radar signal processing unit in the radar module to facilitate angle compensation and correction in a later phase, to support high-precision radar flow-velocity measurement.

Optionally, after determining the Doppler information of the radar module, the radar module determines a first relative velocity based on the Doppler information, where the first relative velocity is a radial velocity relative to the radar module; and determines average flow velocity information in the monitoring region, to be specific, the first flow velocity on the fluid surface, based on the first relative velocity and the radar pose information.

For example, the Doppler information of the radar module is $f_D$, and the first relative velocity is obtained through calculation by using the following formula:

$$v^r = f_D * \frac{c_0}{2f_0}$$

, where $f_0$ is the frequency of the transmitted signal, and $c_0$ is the speed of light in vacuum.

For example, a vertical angle between a location of the main beam of the radar module and a location $d_{loc}$ of the beam center point is $\beta$, and the horizontal angle is $\delta$. A high-precision flow-velocity vector, to be specific, average flow velocity information $\vec{V}_{radar}^r$, of the radar module at the location is calculated by using the following formula:

$$\vec{V}_{radar}^r = \frac{v^r}{\cos\delta\cos\beta}$$

.

It should be noted that step 704 and step 705 may be performed in sequence in a same time period, or may be performed in parallel in a same time period. This is not limited in this embodiment of this application.

Step 706: Fuse the first flow velocity and the second flow velocity to obtain a third flow velocity on the fluid surface.

A radar flowmeter in related technologies relies on a single-point technology to measure a flow velocity on a surface, and then estimates a discharge based on a flow velocity-discharge calculation model. Current non-contact measurement technologies focus on a radar flowmeter and a visual flowmeter, which have respective advantages and disadvantages. First, the visual flowmeter naturally has a flow-velocity measurement result with a higher dimensionality than the radar flowmeter. Compared with the radar flowmeter that can only perform single-point flow-velocity measurement using a single beam, a single camera in a visual monitoring manner can easily capture features on a 100-meter fluid surface, and a vector direction and flow velocity information of a flow field of a large-range fluid surface can be further calculated based on captured rich flow field information on the fluid surface. Therefore, a visual flow-velocity monitoring manner may provide a flow velocity-discharge model with more flow velocity information, so that a discharge measurement result of the flow velocity-discharge model is more accurate. The radar flowmeter can only provide a single-point flow-velocity measurement result. If a flow velocity on a large-range fluid surface is to be observed, multi-point deployment or scan multi-point measurement using a movable device is required along a fluid cross section. Next, the radar flowmeter can implement all-weather observation more easily than a visual monitoring manner. The radar (a microwave or millimeter wave frequency band) flowmeter is completely insusceptible to light interference, haze weather, and water being excessively clear/excessively muddy. However, the acquisition and analysis of images of the fluid surface in a visual manner are easily susceptible to weather and a light distribution, resulting in a reduced effective rate of data.

Currently, both the radar flowmeter and the visual flowmeter have some inherent scenario limitations. To meet a requirement of the Ministry of Water Resources of China for all-weather and high-precision measurement of a flow-velocity measurement device, in this patent, with reference to the advantages and disadvantages of a radar monitoring manner and a visual monitoring manner, embodiments of this application provide a fusion flow-velocity measurement method based on a radar-vision fusion flow-velocity measurement system, to implement high-precision and all-weather-observation flow-velocity monitoring.

The radar-vision fusion flow-velocity measurement system includes a vision module and a radar module, which work collaboratively. In one aspect, the vision module performs the foregoing steps performed by the vision module. The steps include: determining distribution of a feature on the fluid surface, and selecting different visual flow-velocity measurement algorithms (LSPIV algorithm/STIV algorithm). According to different selected flow-velocity measurement algorithms, the second flow velocity of the vision module may be classified into two types:

One type is one-dimensional flow-velocity vector field information, to be specific, the second flow velocity indicates flow velocities at locations of a plurality of flow-velocity measurement lines. For example, when the surface features of the fluid are sparsely distributed, the STIV algorithm is used to measure a one-dimensional flow-velocity vector field.

When the fluid surface feature is sparse, K flow-velocity measurement lines (which may be set by default or manually selected) are determined, coordinate locations of the K flow-velocity measurement lines are marked as

$$\vec{d}_{video} = [\vec{d}^0_{video}, \dots, \vec{d}^k_{video}, \dots, \vec{d}^K_{video}]$$

, and flow velocities at locations of the flow-velocity measurement lines are calculated by using the STIV algorithm:

$$\vec{v}_{video} = [\vec{v}^0_{video}, \dots \vec{v}^k_{video}, \dots, \vec{v}^K_{video}]$$

. The second flow velocity finally outputted by the vision module includes $\vec{d}_{video}$ and $\vec{v}^{syn}_{i,video}$, where i = k.

The other type is two-dimensional flow-velocity vector field information. For example, when the distribution of fluid surface features is rich or the distribution of fluid surface features is medium, the LSPIV algorithm and the STIV algorithm are used to measure a two-dimensional flow-velocity vector field. As shown in the example in step 704, the second flow velocity finally outputted by the vision module includes $\vec{v}^{syn}_{i,video}$ and a corresponding coordinate location $\vec{d}_{video}$.

In another aspect, the radar module performs the foregoing steps performed by the radar module, and the first flow velocity finally outputted by the radar module includes $\vec{v}^r_{radar}$ and a corresponding coordinate location $\vec{d}_{radar}$.

Optionally, a fusion computing platform fuses the first flow velocity and the second flow velocity to obtain the third flow velocity on the fluid surface, where the fusion includes at least one of interpolation, complementation, and correction.

Optionally, a fusion computing platform obtains reference data; and corrects the third flow velocity based on the reference data to obtain a fourth flow velocity on the fluid surface.

Optionally, the reference data is sensing data inputted by another sensor, and the reference data includes at least one of a wind speed, a wind direction, or a rainfall.

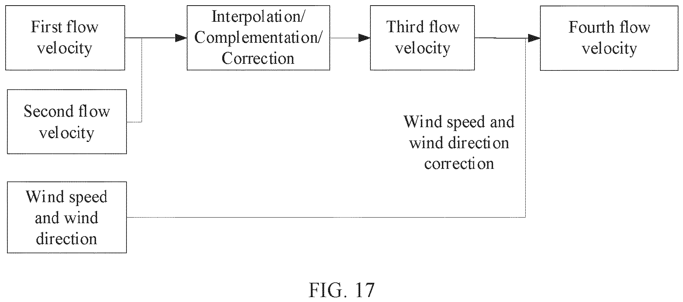

In an example, as shown in FIG. 17, the another sensor is a wind speed measurement module. The fusion computing platform performs at least one of interpolation/complementation/correction on the first flow velocity and the second flow velocity, to obtain a radar-vision fusion flow-velocity measurement result, to be specific, the third flow velocity, and performs further wind speed and wind direction correction on the third flow velocity based on a measured wind speed and direction and a pre-trained hydrological theoretical model, to obtain the fourth flow velocity.

For example, a wind speed $v_{wind}$ and a wind direction $\theta_{wind}$ are measured in real time by using the wind speed measurement module; and a wind speed coefficient $k_{wind}$ is defined based on different wind directions $\theta_{wind}$, and the third flow velocity $v_{syn}$ is corrected by using the following formula: $v_{final} = v_{syn} - k_{wind}(\theta_{wind}) \cdot v_{wind}$.

It should be noted that a type of another sensor is not limited in this embodiment of this application.

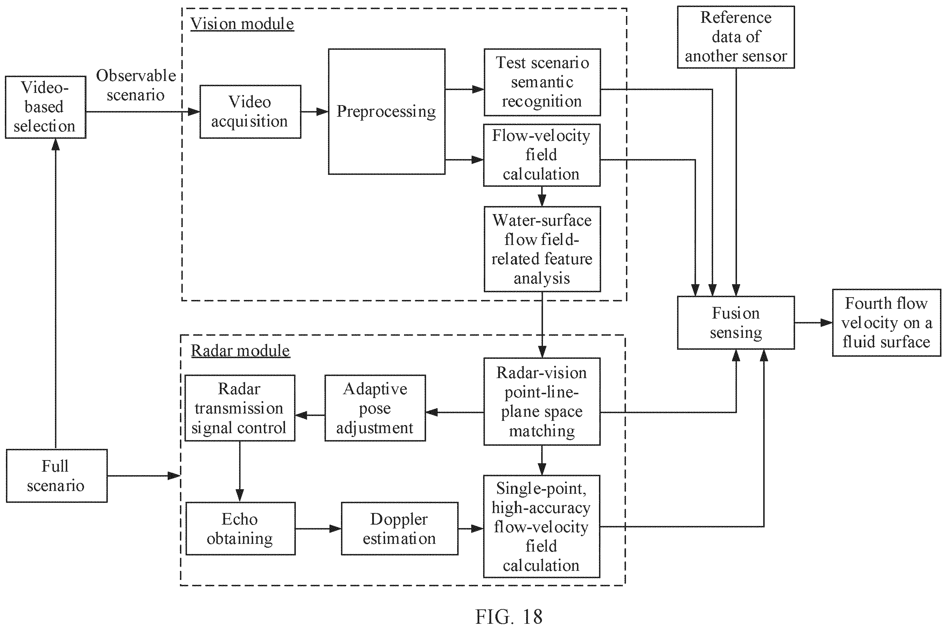

In a possible implementation, a method for measuring a flow velocity on a fluid surface based on a radar-vision fusion flow-velocity measurement system provided in this embodiment of this application is shown in FIG. 18. The radar-vision fusion flow-velocity measurement system includes a vision module, a radar module, and a fusion computing platform. Based on actual deployment requirements and memory and computing power configuration of each module, discrete deployment or integrated deployment is used, and then the third flow velocity is measured. First, the vision module acquires a to-be-processed video and then performs selection on the video, to be specific, determines and classifies, by using a scenario semantics and AI image processing algorithm, whether a fluid surface is an observable scenario, and further observes and classifies a light status on the fluid surface and a distribution density of fluid surface features in the observable scenario. Next, the vision module uses an LSPIV algorithm to calculate and classify a two-dimensional flow-velocity field vector on the fluid surface, and selects a monitoring region with a stable flow field and a fluid flowing in a straight direction. Further next, the vision module and the radar module flexibly adjust a visual focus region and a pose of the radar module based on a location of the selected monitoring region, and perform flow-velocity detection using a high-precision radar/vision flow-velocity measurement technology. Finally, the radar module and the vision module send respective measurement results (a first flow velocity and a second flow velocity) to the fusion computing platform, perform the interpolation and mutual calibration of a radar-vision flow velocity to obtain a result of the radar-vision fusion flow-velocity measurement, to be specific, a third flow velocity on the fluid surface, and use reference data inputted by the another sensor model to further correct the result of the radar-vision fusion flow-velocity measurement to eliminate the impact of a wind speed and a rainfall on the flow velocity, to finally obtain a fourth flow velocity on the fluid surface, so that high-precision, all-weather, and wide-range flow field monitoring based on a radar-vision fusion platform can be implemented.

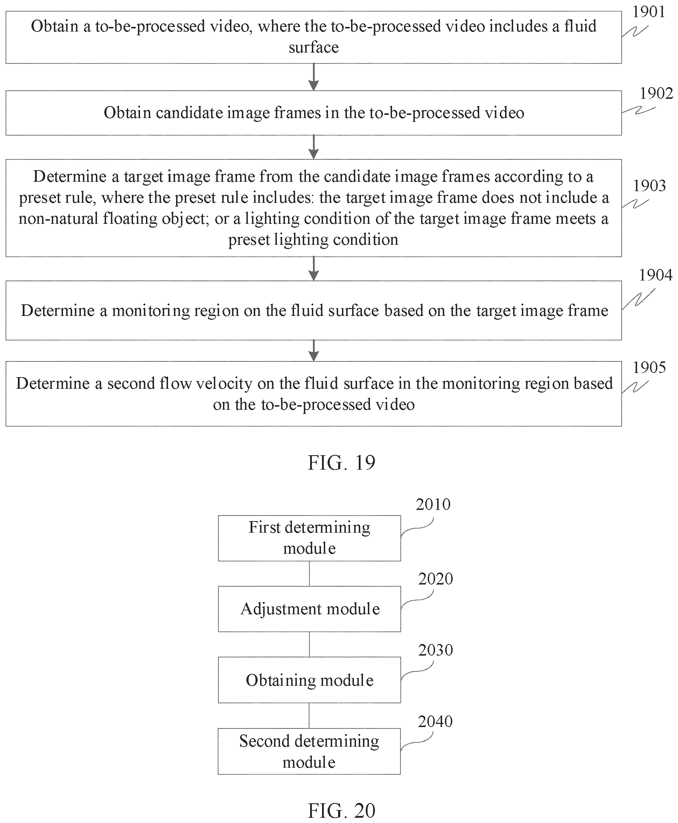

FIG. 19 is a flowchart of a method for measuring a flow velocity on a fluid surface according to another example embodiment of this application. This embodiment is described by using an example in which the method is applied to the vision module shown in FIG. 3 or FIG. 4. The method includes several steps below.

Step 1910: Obtain a to-be-processed video, where the to-be-processed video includes a fluid surface.

Step 1920: Obtain candidate image frames in the to-be-processed video.

Step 1930: Determine a target image frame from the candidate image frames according to a preset rule, where the preset rule includes: the target image frame does not include a non-natural floating object; or a lighting condition of the target image frame meets a preset lighting condition.

The target image frame is an image frame that meets the preset rule, and the preset rule includes: the target image frame does not include a non-natural floating object; or a lighting condition of the target image frame meets a preset lighting condition.

Optionally, the non-natural floating object is a floating object whose size is greater than a preset size threshold or a floating object of a preset type.

Optionally, a flow-velocity measurement line of a monitoring region is in a direction of fluid flow.

Optionally, the monitoring region does not include a non-natural floating object, and the non-natural floating object is a floating object whose size is greater than a preset size threshold or a floating object of a preset type.

Step 1940: Determine a monitoring region on the fluid surface based on the target image frame.

Step 1950: Determine a second flow velocity on the fluid surface in the monitoring region based on the to-be-processed video.

Optionally, a fluid surface feature of the monitoring region is determined based on the to-be-processed video, where the fluid surface feature indicates a fluid feature or distribution of floating objects in the monitoring region; a velocity measurement algorithm is determined based on the fluid surface feature; and the second flow velocity on the fluid surface in the monitoring region is determined based on the to-be-processed video by using the velocity measurement algorithm.

In another possible implementation, that the fluid surface feature indicates the fluid feature or a distribution density of the floating objects in the monitoring region is used as an example, and the determining a velocity measurement algorithm based on the fluid surface feature includes: if the fluid surface feature is in a first level, determining the velocity measurement algorithm as a cross-correlation algorithm or an autocorrelation algorithm; or if the fluid surface feature is in a second level, determining the velocity measurement algorithm as an autocorrelation algorithm, where fluid features or distribution densities of the floating objects in the monitoring region corresponding to the first level and the second level decrease sequentially.

Optionally, the cross-correlation algorithm includes an LSPIV algorithm, and the autocorrelation algorithm includes an STIV algorithm.

It should be noted that, for a process in which a vision module measures a flow velocity on the fluid surface, refer to related details in the foregoing embodiment. Details are not described herein again.

Optionally, the vision module obtains reference data; and corrects the second flow velocity based on the reference data to obtain a fifth flow velocity on the fluid surface.

For example, the reference data is sensing data inputted by another sensor, and the reference data includes at least one of a first flow velocity that is on the fluid surface and that is determined by a radar module, a wind speed, a wind direction, or a rainfall.

It should be noted that, for a process in which the vision module corrects the second flow velocity to obtain the fifth flow velocity on the fluid surface, refer to related details in the foregoing embodiment. Details are not described herein again.

In summary, a video including a fluid surface is obtained, candidate image frames in the video are obtained, a target image frame is determined from the candidate image frames according to a preset rule, and a monitoring region on the fluid surface is determined based on the target image frame. The second flow velocity on the fluid surface in the monitoring region is determined based on the to-be-processed video. In other words, the target image frame and the monitoring region are intelligently selected, and an observation scenario that does not meet a requirement of a flow-velocity measurement specification is removed, to ensure accuracy of the determined monitoring region, provide a priori knowledge for a subsequent flow-velocity measurement algorithm, and ensure a high-precision flow-velocity measurement result.

Apparatus embodiments of this application are provided below, and may be configured to perform the method embodiment of this application. For details not disclosed in the apparatus embodiments of this application, refer to the method embodiments of this application.

FIG. 20 is a block diagram of an apparatus for measuring a flow velocity on a fluid surface according to an example embodiment of this application. The apparatus may be implemented, by using software, hardware, or a combination thereof, as all or a part of the radar-vision fusion flow-velocity measurement system shown in FIG. 3 or FIG. 4. The apparatus may include:

a first determining module 2010, configured to determine a monitoring region on a fluid surface in a to-be-processed video;

an adjustment module 2020, configured to adjust a pose of a radar system based on a location of the monitoring region, so that the adjusted radar system transmits a radar signal to the monitoring region;

an obtaining module 2030, configured to obtain point cloud data, where the point cloud data is obtained based on a reflected signal of the radar signal; and

a second determining module 2040, configured to determine a first flow velocity on the fluid surface based on the point cloud data.

In a possible implementation, the fluid surface includes a water body surface.

In another possible implementation, the pose of the radar system includes a location and an angle of the radar system.

In another possible implementation, the point cloud data includes Doppler information of the radar system.

In another possible implementation, the first determining module 2010 is further configured to:

determine a target image frame in the to-be-processed video; and

determine the monitoring region on the fluid surface based on the target image frame.

In another possible implementation, the target image frame is an image frame that meets a preset rule, and the preset rule includes that a lighting condition of the target image frame meets a preset lighting condition.

In another possible implementation, the target image frame is an image frame that meets a preset rule, the preset rule includes that the target image frame does not include a non-natural floating object, and the non-natural floating object is a floating object whose size is greater than a preset size threshold or a floating object of a preset type.

In another possible implementation, a flow-velocity measurement line of the monitoring region is in a direction of fluid flow.

In another possible implementation, the monitoring region does not include a non-natural floating object, and the non-natural floating object is a floating object whose size is greater than a preset size threshold or a floating object of a preset type.

In another possible implementation, the second determining module is further configured to:

obtain radar pose information after the adjustment, where the radar pose information indicates an angle of a radar module after the adjustment; and

determine the first flow velocity on the fluid surface based on the point cloud data and the radar pose information of the radar module.

In another possible implementation, the apparatus further includes:

a third determining module, configured to determine a second flow velocity on the fluid surface in the monitoring region based on the to-be-processed video; and

a fusion module, configured to fuse the first flow velocity and the second flow velocity to obtain a third flow velocity on the fluid surface.

In another possible implementation, the apparatus further includes: a fourth determining module, configured to:

> determine a fluid surface feature of the monitoring region based on the to-be-processed video, where the fluid surface feature indicates a fluid feature or distribution of floating objects in the monitoring region; and
> determine a velocity measurement algorithm based on the fluid surface feature; and
> the third determining module is further configured to: determine the second flow velocity on the fluid surface in the monitoring region based on the to-be-processed video by using the velocity measurement algorithm.

In another possible implementation, the fluid surface feature indicates the fluid feature or a distribution density of the floating objects in the monitoring region, and the fourth determining module is further configured to:

> if the fluid surface feature is in a first level, determine the velocity measurement algorithm as a cross-correlation algorithm or an autocorrelation algorithm; or
> if the fluid surface feature is in a second level, determine the velocity measurement algorithm as an autocorrelation algorithm,
> where fluid features or distribution densities of the floating objects in the monitoring region corresponding to the first level and the second level decrease sequentially.

In another possible implementation, the cross-correlation algorithm includes an LSPIV algorithm, and the autocorrelation algorithm includes an STIV algorithm.

In another possible implementation, the fusion module is further configured to:
fuse the first flow velocity and the second flow velocity to obtain the third flow velocity on the fluid surface, where the fusion includes at least one of interpolation, complementation, and correction.

In another possible implementation, the apparatus further includes: a correction module, configured to:

> obtain reference data; and
> correct the third flow velocity based on the reference data to obtain a fourth flow velocity on the fluid surface.

In another possible implementation, the reference data includes at least one of a wind speed, a wind direction, or a rainfall.

It should be noted that, when the apparatus provided in the foregoing embodiments implements the functions of the apparatus, division of the foregoing functional modules is only used as an example for description. During actual application, the foregoing functions may be allocated to different functional modules for implementation as required, to be specific, an inner structure of a device is divided into different functional modules, to implement all or some of the functions described above. In addition, the apparatuses provided in the foregoing embodiments and the method embodiments belong to a same concept. For specific implementation processes thereof, refer to the method embodiments. Details are not described herein again.

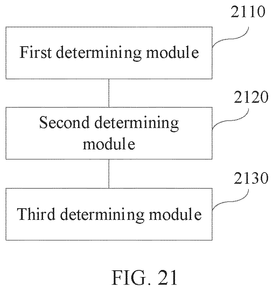

FIG. 21 is a block diagram of an apparatus for measuring a flow velocity on a fluid surface according to another example embodiment of this application. The apparatus may be implemented, by using software, hardware, or a combination thereof, as all or a part of the vision module shown in FIG. 3 or FIG. 4. The apparatus may include:

> a first determining module 2110, configured to determine a target image frame in a to-be-processed video, where the target image frame is an image frame that meets a preset rule, and the preset rule includes that a lighting condition of the target image frame meets a preset lighting condition or the target image frame does not include a non-natural floating object;
> a second determining module 2120, configured to determine a monitoring region on a fluid surface based on the target image frame; and
> a third determining module 2130, configured to determine a second flow velocity on the fluid surface in the monitoring region based on the to-be-processed video.

In a possible implementation, the fluid surface includes a water body surface.

In another possible implementation, the pose of the radar system includes a location and an angle of the radar system.

In another possible implementation, point cloud data includes Doppler information of the radar system.

In another possible implementation, the non-natural floating object is a floating object whose size is greater than a preset size threshold or a floating object of a preset type.

In another possible implementation, a flow-velocity measurement line of the monitoring region is in a direction of fluid flow.

In another possible implementation, the monitoring region does not include a non-natural floating object, and the non-natural floating object is a floating object whose size is greater than a preset size threshold or a floating object of a preset type.

In another possible implementation, the third determining module 2130 is further configured to:

> determine a fluid surface feature of the monitoring region based on the to-be-processed video, where the fluid surface feature indicates a fluid feature or distribution of floating objects in the monitoring region; and

determine a velocity measurement algorithm based on the fluid surface feature; and

determine the second flow velocity on the fluid surface in the monitoring region based on the to-be-processed video by using the velocity measurement algorithm.

In another possible implementation, the fluid surface feature indicates the fluid feature or a distribution density of the floating objects in the monitoring region, and the third determining module 2130 is further configured to:

if the fluid surface feature is in a first level, determine the velocity measurement algorithm as a cross-correlation algorithm or an autocorrelation algorithm; or
if the fluid surface feature is in a second level, determine the velocity measurement algorithm as an autocorrelation algorithm,
where fluid features or distribution densities of the floating objects in the monitoring region corresponding to the first level and the second level decrease sequentially.

In another possible implementation, the cross-correlation algorithm includes an LSPIV algorithm, and the autocorrelation algorithm includes an STIV algorithm.

In another possible implementation, the apparatus further includes: a correction module, configured to:

obtain reference data; and
correct the second flow velocity based on the reference data to obtain a fifth flow velocity on the fluid surface.

It should be noted that, when the apparatus provided in the foregoing embodiments implements the functions of the apparatus, division of the foregoing functional modules is only used as an example for description. During actual application, the foregoing functions may be allocated to different functional modules for implementation as required, to be specific, an inner structure of a device is divided into different functional modules, to implement all or some of the functions described above. In addition, the apparatuses provided in the foregoing embodiments and the method embodiments belong to a same concept. For specific implementation processes thereof, refer to the method embodiments. Details are not described herein again.

Optionally, embodiments of this application provide a radar-vision fusion flow-velocity measurement system. The system includes a vision module and a radar module. The system is configured to implement the method for measuring a flow velocity on a fluid surface in the foregoing method embodiments.

Optionally, embodiments of this application provide an apparatus for measuring a flow velocity on a fluid surface. The apparatus includes a processor, and a memory configured to store instructions executable by the processor. When the processor is configured to implement the method for measuring a flow velocity on a fluid surface in the foregoing method embodiments when executing the instructions.

Optionally, embodiments of this application provide a computer program product. The computer program product includes computer-readable instructions. When the computer-readable instructions run on a computer device, the computer device is enabled to perform the method for measuring a flow velocity on a fluid surface in the foregoing method embodiments.

Optionally, embodiments of this application provide a computer-readable storage medium, where the computer-readable storage medium stores computer-readable instructions. When the computer-readable instructions run on a computer device, the computer device is enabled to perform the method for measuring a flow velocity on a fluid surface in the foregoing method embodiments.

The computer-readable storage medium may be a tangible device that may hold and store instructions used by an instruction execution device. The computer-readable storage medium may be, for example, but not limited to, an electrical storage device, a magnetic storage device, an optical storage device, an electromagnetic storage devices, a semiconductor storage device, or any suitable combination of the above. More specific examples (non-exhaustive list) of the computer-readable storage medium include: a portable computer disk, a hard disk, a random-access memory (Random-Access Memory, RAM), a read-only memory (Read-Only Memory, ROM), an erasable programmable read-only memory (Electrically Programmable Read-Only Memory, EPROM, or flash memory), a static random-access memory (Static Random-Access Memory, SRAM), a portable compact disk read-only memory (Compact Disc Read-Only Memory, CD-ROM), a digital video disk (Digital Video Disc, DVD), a memory stick, a floppy disk, a mechanical coding device, for example, a punching card or a groove protrusion structure that stores instructions, and any suitable combination thereof.

Computer-readable program instructions or code described herein can be downloaded to respective computing/processing devices from a computer-readable storage medium, or downloaded to an external computer or external storage device via networks such as the Internet, a local area network, a wide region network and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform the operations in this application may be assembly instructions, instruction set architecture (Instruction Set Architecture, ISA) instructions, machine instructions, machine-related instructions, microcode, firmware instructions, status setting data, or source code or object code written in any combination of one or more programming languages. The programming languages include an object-oriented programming language such as Smalltalk and C++, and conventional procedural programming languages such as a "C" language or a similar programming language. The computer-readable program instructions may be executed entirely on a user computer, partly on the user computer, as a stand-alone software package, partly on the user computer and partly on a remote computer, or entirely on the remote computer or a server. In a case involving a remote computer, the remote computer may be connected to a user computer over any type of network, including a local area network (Local Area Network, LAN) or a wide region network (Wide Region Network, WAN), or may be connected to an external computer (for example, connected over Internet using an Internet service provider). In some embodiments, an electronic circuit, for example, a programmable logic circuit, a field-programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a dedicated computer, or another programmable data processing apparatus to produce a machine, so that the instructions, when executed by the processor of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing the various aspects of the functions/acts specified in the one or more blocks in the flowcharts and/or the block diagrams.

The computer-readable program instructions may alternatively be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implements the functions/acts specified in the one or more blocks in the flowcharts and/or block diagrams.

The flowcharts and block diagrams in the accompanying drawings show possible implementations of system architectures, functions, and operations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function involved.

It should also be noted that each block in the block diagram and/or the flowchart, and a combination of blocks in the block diagram and/or the flowchart may be implemented by hardware (for example, a circuit or an ASIC (Application Specific Integrated Circuit, application specific integrated circuit)) that performs a corresponding function or action, or may be implemented by a combination of hardware and software, for example, firmware.

Although this application is described with reference to embodiments, in a process of implementing this application that claims protection, a person skilled in the art may understand and implement another variation of the disclosed embodiments by viewing the appended drawings, disclosed content, and the appended claims. In the claims, "comprising" (comprising) does not exclude another component or another step, and "a" or "one" does not exclude a case of "a plurality of". A single processor or another unit may implement several functions enumerated in the claims. Some measures are recited in dependent claims that are different from each other, but this does not mean that these measures cannot be combined to produce good effect.

The foregoing has described embodiments of this application. The foregoing descriptions are examples, not exhaustive, and are not limited to the disclosed embodiments. Many modifications and changes are apparent to those of ordinary skill in the art without departing from the scope and spirit of the illustrated embodiments. The selection of terms used herein is intended to best explain the principles of embodiments, practical applications, or improvements to technologies in the market, or to enable another person of ordinary skill in the art to understand embodiments disclosed herein.

**Claims**

1. A method for measuring a flow velocity on a fluid surface, wherein the method comprises:

   determining a monitoring region on a fluid surface in a to-be-processed video;
   adjusting a pose of a radar system based on a location of the monitoring region, so that the adjusted radar system transmits a radar signal to the monitoring region;
   obtaining point cloud data, wherein the point cloud data is obtained based on a reflected signal of the radar signal; and
   determining a first flow velocity on the fluid surface based on the point cloud data.

2. The method according to claim 1, wherein the determining a monitoring region on a fluid surface in a to-be-processed video comprises:

   determining a target image frame in the to-be-processed video; and
   determining the monitoring region on the fluid surface based on the target image frame.

3. The method according to claim 2, wherein the target image frame is an image frame that meets a preset rule, and the preset rule comprises that a lighting condition of the target image frame meets a preset lighting condition.

4. The method according to claim 2, wherein the target image frame is an image frame that meets a preset rule, the preset rule comprises that the target image frame does not comprise a non-natural floating object, and the non-natural floating object is a floating object whose size is greater than a preset size threshold or a floating object of a preset type.

5. The method according to any one of claims 1 to 4, wherein a flow-velocity measurement line of the monitoring region is in a direction of fluid flow.

6. The method according to any one of claims 1 to 3 and 5, wherein the monitoring region does not comprise a non-natural floating object, and the non-natural floating object is a floating object whose size is greater than a preset size threshold or a floating object of a preset type.

7. The method according to any one of claims 1 to 6, wherein the determining a first flow velocity on the fluid surface based on the point cloud data comprises:

   obtaining radar pose information after the adjustment; and
   determining the first flow velocity on the fluid surface based on the point cloud data and the radar pose information of the radar system.

8. The method according to any one of claims 1 to 7, wherein the method further comprises:

   determining a second flow velocity on the fluid surface in the monitoring region based on the to-be-processed video; and
   fusing the first flow velocity and the second flow velocity to obtain a third flow velocity on the fluid surface.

9. The method according to claim 8, wherein the method further comprises:

   determining a fluid surface feature of the monitoring region based on the to-be-processed video, wherein the fluid surface feature indicates a fluid feature or distribution of floating objects in the monitoring region; and
   determining a velocity measurement algorithm based on the fluid surface feature; and
   the determining a second flow velocity on the fluid surface in the monitoring region based on the to-be-processed video comprises:
   determining the second flow velocity on the fluid surface in the monitoring region based on the to-be-processed video by using the velocity measurement algorithm.

10. The method according to claim 9, wherein the fluid surface feature indicates the fluid feature or a distribution density of the floating objects in the monitoring region, and the determining a velocity measurement algorithm based on the fluid surface feature comprises:

    if the fluid surface feature is in a first level, determining the velocity measurement algorithm as a cross-correlation algorithm or an autocorrelation algorithm; or
    if the fluid surface feature is in a second level, determining the velocity measurement algorithm as the autocorrelation algorithm, wherein fluid features or distribution densities of the floating objects in the monitoring region corresponding to the first level and the second level decrease sequentially.

**11.** The method according to claim 10, wherein the cross-correlation algorithm comprises an LSPIV algorithm, and the autocorrelation algorithm comprises an STIV algorithm.

**12.** The method according to any one of claims 8 to 11, wherein the fusing the first flow velocity and the second flow velocity to obtain a third flow velocity on the fluid surface comprises:
fusing the first flow velocity and the second velocity to obtain the third flow velocity on the fluid surface, wherein the fusion comprises at least one of interpolation, complementation, and correction.

**13.** The method according to any one of claims 8 to 12, wherein the method further comprises:

obtaining reference data; and
correcting the third flow velocity based on the reference data to obtain a fourth flow velocity on the fluid surface.

**14.** The method according to claim 13, wherein the reference data comprises at least one of a wind speed, a wind direction, or a rainfall.

**15.** A method for measuring a flow velocity on a fluid surface, wherein the method comprises:

determining a target image frame in a to-be-processed video, wherein the target image frame is an image frame that meets a preset rule, and the preset rule comprises that a lighting condition of the target image frame meets a preset lighting condition or the target image frame does not comprise a non-natural floating object;
determining a monitoring region on the fluid surface based on the target image frame; and
determining a second flow velocity on the fluid surface in the monitoring region based on the to-be-processed video.

**16.** The method according to claim 15, wherein the non-natural floating object is a floating object whose size is greater than a preset size threshold or a floating object of a preset type.

**17.** The method according to claim 15 or 16, wherein a flow-velocity measurement line of the monitoring region is in a direction of fluid flow.

**18.** The method according to any one of claims 15 to 17, wherein the determining a second flow velocity on the fluid surface in the monitoring region based on the to-be-processed video comprises:

determining a fluid surface feature of the monitoring region based on the to-be-processed video, wherein the fluid surface feature indicates a fluid feature or distribution of floating objects in the monitoring region; and
determining a velocity measurement algorithm based on the fluid surface feature; and
determining the second flow velocity on the fluid surface in the monitoring region based on the to-be-processed video by using the velocity measurement algorithm.

**19.** The method according to claim 18, wherein the fluid surface feature indicates the fluid feature or a distribution density of the floating objects in the monitoring region, and the determining a velocity measurement algorithm based on the fluid surface feature comprises:

if the fluid surface feature is in a first level, determining the velocity measurement algorithm as a cross-correlation algorithm or an autocorrelation algorithm; or
if the fluid surface feature is in a second level, determining the velocity measurement algorithm as the autocorrelation algorithm, wherein fluid features or distribution densities of the floating objects in the monitoring region corresponding to the first level and the second level decrease sequentially.

**20.** The method according to any one of claims 15 to 19, wherein the method further comprises:

obtaining reference data; and
correcting the second flow velocity based on the reference data to obtain a fifth flow velocity on the fluid surface.

**21.** An apparatus for measuring a flow velocity on a fluid surface, wherein the apparatus comprises:

a first determining module, configured to determine a monitoring region on a fluid surface in a to-be-processed video;
an adjustment module, configured to adjust a pose of a radar system based on a location of the monitoring region, so that the adjusted radar system transmits a radar signal to the monitoring region;
an obtaining module, configured to obtain point cloud data, wherein the point cloud data is obtained based on a reflected signal of the radar signal; and
a second determining module, configured to determine a first flow velocity on the fluid surface based on the point cloud data.

**22.** An apparatus for measuring a flow velocity on a fluid surface, wherein the apparatus comprises:

a first determining module, configured to determine a target image frame in a to-be-processed video, wherein the target image frame is an image frame that meets a preset rule, and the preset rule comprises that a lighting condition of the target image frame meets a preset lighting condition or the target image frame does not comprise a non-natural floating object;

a second determining module, configured to determine a monitoring region on the fluid surface based on the target image frame; and

a third determining module, configured to determine a second flow velocity on the fluid surface in the monitoring region based on the to-be-processed video.

**23.** A radar-vision fusion flow-velocity measurement system, wherein the system comprises a vision module and a radar module, and the system is configured to perform the method according to any one of claims 1 to 14.

**24.** An apparatus for measuring a flow velocity on a fluid surface, wherein the apparatus comprises:

a processor; and

a memory, configured to store instructions executable by the processor, wherein

the processor is configured to implement the method according to any one of claims 1 to 14 when executing the instructions, or implement the method according to any one of claims 15 to 20 when executing the instructions.

**25.** A computer program product, wherein the computer program product comprises computer-readable instructions, and when the computer-readable instructions run on a computer device, the computer device is enabled to perform the method according to any one of claims 1 to 14, or perform the method according to any one of claims 15 to 20.

**26.** A computer-readable storage medium, wherein the computer-readable storage medium stores computer-readable instructions, and when the computer-readable instructions run on a computer device, the computer device is enabled to perform the method according to any one of claims 1 to 14, or perform the method according to any one of claims 15 to 20.

Form of a cross section of a river channel+flow velocity on a surface (m/s)

Discharge model

Real-time/Long-term discharge data

Statistics of real-time/long-term observed discharge

FIG. 1

Fixed monitoring station

Uncrewed aerial vehicle

Ground control point

(a)

(b)

FIG. 2

Radar module 320

Radar sensor
322

Radar signal
processing unit
324

Synchronous
data

Another
sensor 340

Synchronization frame
feedback information

Fusion
computing
platform 330

Application
unit 350

Camera sensor
312

Video image
processing unit
314

Synchronous
data

Vision module 310

FIG. 3

First
measurement
result and
second
measurement
result

Another
sensor 440

Camera sensor
412+radar
sensor 422

Video image
processing unit
414/Radar signal
processing unit
424

Fusion
computing
platform 430

Application
unit 450

FIG. 4

FIG. 5

| | |
|---|---|
| Determine a monitoring region on a fluid surface in a to-be-processed video | 601 |
| Adjust a pose of a radar system based on a position of the monitoring region, so that the radar system after the adjustment transmits a radar signal to the monitoring region | 602 |
| Obtain point cloud data, where the point cloud data is obtained based on a reflected signal of the radar signal | 603 |
| Determine a first flow velocity on the fluid surface based on the point cloud data | 604 |

FIG. 6

701

Obtain candidate image frames in a to-be-processed video, where the to-be-processed video includes a fluid surface

702

Determine a target image frame from the candidate image frames according to a preset rule

703

Determine a monitoring region on the fluid surface based on the target image frame

705

A radar module determines a first flow velocity on the fluid surface based on a position of the monitoring region

705

Determine a second flow velocity on the fluid surface in the monitoring region based on the to-be-processed video

706

Fuse the first flow velocity and the second flow velocity to obtain a third flow velocity on the fluid surface

FIG. 7

Obtain candidate image frames in a to-be-processed video, where the to-be-processed video includes a fluid surface — 701

Determine whether a candidate image frame includes a non-natural floating object — 801 — No

Yes

Determine whether a lighting condition of the candidate image frame meets a preset lighting condition — 802 — No

Yes

Determine a fluid surface feature in a monitoring region based on the to-be-processed video, where the fluid surface feature indicates a fluid feature or a distribution status of floating objects in the monitoring region — 803

703

FIG. 8

AI image recognition technology

1: Obtain a to-be-processed video, and determine a candidate image frame from the to-be-processed video

2: Determine whether a candidate image frame includes a non-natural floating object

No →

3: Determine whether a lighting condition of the candidate image frame meets a preset lighting condition

Yes →

4: Identify a fluid surface feature of a monitoring region based on the to-be-processed video

Yes

No

Rich distribution of water surface features

Medium distribution of water surface features

Sparse distribution of water surface features

FIG. 9

FIG. 10

FIG. 11

FIG. 12

FIG. 13

FIG. 14

| Adjust a pose of a radar system based on a position of a monitoring region, so that the radar system after the adjustment transmits a radar signal to the monitoring region | 1501 |

| Obtain point cloud data, where the point cloud data is obtained based on a reflected signal of the radar signal | 1502 |

| Determine a first flow velocity on a fluid surface based on the point cloud data | 1503 |

FIG. 15

FIG. 16

EP 4 417 979 A1

First flow velocity

Second flow velocity

Wind speed and wind direction

Interpolation/ Complementation/ Correction

Third flow velocity

Wind speed and wind direction correction

Fourth flow velocity

FIG. 17

FIG. 18

Obtain a to-be-processed video, where the to-be-processed video includes a fluid surface

1901

Obtain candidate image frames in the to-be-processed video

1902

Determine a target image frame from the candidate image frames according to a preset rule, where the preset rule includes: the target image frame does not include a non-natural floating object; or a lighting condition of the target image frame meets a preset lighting condition

1903

Determine a monitoring region on the fluid surface based on the target image frame

1904

Determine a second flow velocity on the fluid surface in the monitoring region based on the to-be-processed video

1905

FIG. 19

First determining module

2010

Adjustment module

2020

Obtaining module

2030

Second determining module

2040

FIG. 20

First determining module — 2110

Second determining module — 2120

Third determining module — 2130

FIG. 21

## INTERNATIONAL SEARCH REPORT

| International application No. |
|---|
| **PCT/CN2022/126428** |

| A. | CLASSIFICATION OF SUBJECT MATTER |
|---|---|

G01P 5/00(2006.01)i; G01S 13/58(2006.01)i; G01S 19/42(2010.01)i; G01C 11/00(2006.01)i

According to International Patent Classification (IPC) or to both national classification and IPC

| B. | FIELDS SEARCHED |
|---|---|

Minimum documentation searched (classification system followed by classification symbols)

G01P, G01S, G01C

Documentation searched other than minimum documentation to the extent that such documents are included in the fields searched

Electronic data base consulted during the international search (name of data base and, where practicable, search terms used)

CNPAT; CNKI; WPI; EPODOC: 流速, 流量, 雷达, 视频, 图像, 视觉, 监测, 监控, 检测, 监视 , 测量, 区域, 流体, 河道, 水体, 流水, 水流, 位姿, 角度, 调整, fluid, liquid, speed, velocity, radar, video, vision, visual, monitor, surpervis+, measur+, area, water, modif+, position, angle

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 207923129 U (WUXI HANGZHENG SCIENCE AND TECHNOLOGY CO., LTD.) 28 September 2018 (2018-09-28) description, paragraphs [0004]-[0044], and figures 1-8 | 1-14, 21, 23-26 |
| Y | CN 110531790 A (BEIJING JIANGHE TONGCHUANG TECHNOLOGY DEVELOPMENT CO., LTD.) 03 December 2019 (2019-12-03) description, paragraphs [0031]-[0050], and figures 1-6 | 1-14, 21, 23-26 |
| Y | CN 109859269 A (CHONGQING JIAOTONG UNIVERSITY) 07 June 2019 (2019-06-07) description, paragraphs [0006]-[0102], and figures 1-3 | 2-4, 8-14 |
| X | CN 109859269 A (CHONGQING JIAOTONG UNIVERSITY) 07 June 2019 (2019-06-07) description, paragraphs [0006]-[0102], and figures 1-3 | 15-20, 22, 24-26 |
| A | CN 110865367 A (SHANXI HEYUAN TECHNOLOGY, INC.) 06 March 2020 (2020-03-06) entire document | 1-26 |
| A | CN 107590819 A (ZHEJIANG UNIVERSITY OF TECHNOLOGY) 16 January 2018 (2018-01-16) entire document | 1-26 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 December 2022** | **22 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/126428** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 20200071960 A (CHUNGBUK NATIONAL UNIVERSITY INDUSTRY-ACADEMIC COOPERATION FOUNDATION) 22 June 2020 (2020-06-22)<br>entire document | 1-26 |
| A | CN 113048953 A (TIANDY TECHNOLOGIES CO., LTD.) 29 June 2021 (2021-06-29)<br>entire document | 1-26 |

Form PCT/ISA/210 (second sheet) (January 2015)

**INTERNATIONAL SEARCH REPORT**
Information on patent family members

International application No.

**PCT/CN2022/126428**

| Patent document cited in search report | | | Publication date (day/month/year) | Patent family member(s) | | | Publication date (day/month/year) |
|---|---|---|---|---|---|---|---|
| CN | 207923129 | U | 28 September 2018 | None | | | |
| CN | 110531790 | A | 03 December 2019 | None | | | |
| CN | 109859269 | A | 07 June 2019 | CN | 109859269 | B | 24 November 2020 |
| CN | 110865367 | A | 06 March 2020 | None | | | |
| CN | 107590819 | A | 16 January 2018 | None | | | |
| KR | 20200071960 | A | 22 June 2020 | KR | 102151815 | B1 | 03 September 2020 |
| CN | 113048953 | A | 29 June 2021 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111265918